(19) Europäisches Patentamt
European Patent Office
Office européen des brevets

(11) EP 4 459 378 A1

(12) EUROPEAN PATENT APPLICATION
published in accordance with Art. 153(4) EPC

(43) Date of publication:
**06.11.2024 Bulletin 2024/45**

(21) Application number: **22916170.8**

(22) Date of filing: **28.12.2022**

(51) International Patent Classification (IPC):
***G03G 9/087** (2006.01)* ***G03G 9/093** (2006.01)*
***G03G 9/097** (2006.01)*

(52) Cooperative Patent Classification (CPC):
**G03G 9/087; G03G 9/093; G03G 9/097**

(86) International application number:
**PCT/JP2022/048560**

(87) International publication number:
**WO 2023/127948 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2021 JP 2021213891**

(71) Applicant: **Kao Corporation**
**Tokyo 103-8210 (JP)**

(72) Inventors:
- **KANO, Kunihiro**
  **Wakayama-shi, Wakayama 640-8580 (JP)**
- **NIIYA, Kanta**
  **Wakayama-shi, Wakayama 640-8580 (JP)**
- **OKAUCHI, Nobuaki**
  **Wakayama-shi, Wakayama 640-8580 (JP)**

(74) Representative: **Vossius & Partner**
**Patentanwälte Rechtsanwälte mbB**
**Siebertstrasse 3**
**81675 München (DE)**

# (54) ELECTROSTATIC IMAGE DEVELOPMENT TONER

(57) Provided is an electrostatic image development toner containing an amorphous resin and a crystalline resin as binder resins, wherein the amorphous resin contains an amorphous polyester resin (A) that is a polycondensate of an alcohol component (a) containing 80 mol% or more of an aliphatic diol (a1) and a carboxylic acid component (b), the alcohol component (a) contains 60 mol% or more of an aliphatic diol (a2) having 5 or 6 carbon atoms and having an alkyl group on a side chain, and the crystalline resin contains a crystalline polyester resin (C) that is a polycondensate of an aliphatic alcohol (c) and a carboxylic acid component (d).

EP 4 459 378 A1

## Description

### Field of the Invention

The present invention relates to an electrostatic image development toner used for developing latent images formed in an electrophotographic method, an electrostatic recording method, an electrostatic printing method, and the like.

### Background of the Invention

In the field of electrophotography, with the progress of electrophotographic systems, it has been demanded to develop toners for electrophotography that are adaptable for an increase in speed and high image quality. In order to deal with the increase in speed, toners require rapid thermal responsiveness, but conventional toners are found to be insufficient in low-temperature fusing property. With the increase in speed, there is a need for improvements in the charge property and durability of toners.

JP 2021-135471 A (PTL 1) describes an electrostatic charge image developer containing: a toner containing toner particles containing a crystalline resin, and an external additive attached to the surface of the toner particles; and a carrier having a resin layer containing magnetic particles and inorganic particles coating the magnetic particles, wherein the inorganic particles have an average particle diameter of 5 nm or more and 90 nm or less, the resin layer has an average thickness of 0.6 μm or more and 1.4 μm or less, and a ratio B/A of a surface area B to a plan view area A is 1.020 or more and 1.100 or less when the surface of the carrier is three-dimensionally analyzed, and describes that the electrostatic charge image developer prevents the generation of uneven brightness of an image.

### Summary of the Invention

The present invention relates to an electrostatic image development toner containing an amorphous resin and a crystalline resin as binder resins, wherein the amorphous resin contains an amorphous polyester resin (A) that is a polycondensate of an alcohol component (a) containing 80 mol% or more of an aliphatic diol (a1) and a carboxylic acid component (b), the alcohol component (a) contains 60 mol% or more of an aliphatic diol (a2) having 5 or 6 carbon atoms and having an alkyl group on a side chain, and the crystalline resin contains a crystalline polyester resin (C) that is a polycondensate of an aliphatic alcohol (c) and a carboxylic acid component (d).

### Detailed Description of the Invention

Although the electrostatic charge image developer described in PTL 1 prevents the generation of uneven brightness of an image, the electrostatic charge image developer has a problem in which the fusing temperature is high.

The present invention relates to an electrostatic image development toner that is excellent in low-temperature fusing property, charge property, and durability.

The inventors of the present invention have found that an electrostatic image development toner containing: an amorphous resin containing an amorphous polyester resin (A) that is a polycondensate of an alcohol component (a) containing 80 mol% or more of an aliphatic diol (a1) and a carboxylic acid component (b), the alcohol component (a) containing 60 mol% or more of an aliphatic diol (a2) having 5 or 6 carbon atoms and having an alkyl group on a side chain; and a crystalline resin containing a crystalline polyester resin (C) that is a polycondensate of an aliphatic alcohol (c) and a carboxylic acid component (d) is excellent in low-temperature fusing property, charge property, and durability.

Specifically, the present invention relates to the following [1].

[1] An electrostatic image development toner containing an amorphous resin and a crystalline resin as binder resins, wherein the amorphous resin contains an amorphous polyester resin (A) that is a polycondensate of an alcohol component (a) containing 80 mol% or more of an aliphatic diol (a1) and a carboxylic acid component (b), the alcohol component (a) contains 60 mol% or more of an aliphatic diol (a2) having 5 or 6 carbon atoms and having an alkyl group on a side chain, and the crystalline resin contains a crystalline polyester resin (C) that is a polycondensate of an aliphatic alcohol (c) and a carboxylic acid component (d).

The present invention provides an electrostatic image development toner that is excellent in low-temperature fusing property, charge property, and durability.

### [Electrostatic Image Development Toner]

An electrostatic image development toner of the present invention (hereinafter also simply referred to as "toner")

contains an amorphous resin and a crystalline resin.

The amorphous resin contains an amorphous polyester resin (A) (hereinafter also simply referred to as "resin (A)") that is a polycondensate of an alcohol component (a) containing 80 mol% or more of an aliphatic diol (a1) and a carboxylic acid component (b). The alcohol component (a) contains 60 mol% or more of an aliphatic diol (a2) having 5 or 6 carbon atoms and having an alkyl group on a side chain. Furthermore, the crystalline resin contains a crystalline polyester resin (C) that is a polycondensate of an aliphatic alcohol (c) and a carboxylic acid component (d).

Due to characteristics mentioned above, the toner of the present invention is excellent in low-temperature fusing property, charge property, and durability.

Although a detail mechanism of the toner of the present invention having excellent low-temperature fusing property, charge property, and durability is not clear, the mechanism is considered as follows.

When in a conventional toner, an amorphous resin using an aliphatic alcohol and having a high ester group concentration is used as a binder resin, a crystalline resin containing a crystalline polyester resin that is more hydrophobic has poor dispersibility in the amorphous resin. Therefore, the toner has poor thermal responsiveness during fusing process, is insufficient in low-temperature fusing property, and tends to be insufficient in charge property and durability.

In the toner of the present invention, the amorphous resin contains the amorphous polyester resin (A) that is a polycondensate of an alcohol component (a) containing 80 mol% or more of an aliphatic diol (a1) and a carboxylic acid component (b), and the alcohol component (a) contains an aliphatic diol (a2) having 5 or 6 carbon atoms and having an alkyl group on a side chain. It is considered that despite a high ester group concentration, the amorphous resin has a structure having a moiety that is highly hydrophobic due to the presence of an alkyl group on a side chain near the ester group, and is susceptible to a hydrophobic interaction with the crystalline polyester resin (C) that is a polycondensate of an aliphatic alcohol (c) and a carboxylic acid component (d). Therefore, it is considered that a hydrophobic interaction between the amorphous resin and the crystalline resin tends to occur and the dispersibility of the crystalline resin in the amorphous resin is favorable. Accordingly, it is considered that while the thermal responsiveness during fusing process of the toner is improved to improve low-temperature fusing property, the dispersibility of the crystalline resin in the inside of the toner particles is improved, and exposure of the crystalline resin to the surface of the toner particles is prevented to improve the charge property and the durability.

The definitions of various terms in this description are described below.

In the description, a carboxylic acid component of a polyester-based resin contains not only the carboxylic acid itself but also an anhydride to form a carboxylic acid through decomposition during a reaction and an alkyl ester of a carboxylic acid (the alkyl group has 1 or more and 3 or less carbon atoms).

Whether a resin is crystalline or amorphous can be determined by the crystallinity index of the resin. The crystallinity index is defined by a ratio of a softening point of a resin to a temperature at the endothermic maximum peak thereof (softening point (°C)/endothermic maximum peak temperature (°C)) in a measurement method described in the section of Examples described below. A crystalline resin is one having a crystallinity index of 0.6 or more and 1.4 or less. An amorphous resin is one in which an endothermic peak is not observed or if observed, one having a crystallinity index of less than 0.6 or more than 1.4. The crystallinity index can be appropriately controlled depending on the kind and the ratio of raw material monomers, and the production conditions such as the reaction temperature, the reaction time, and the cooling speed.

Regarding a hydrocarbon group, a parenthesized expression of "(iso or tertiary)" and "(iso)" means both a case with the prefix and a case without the prefix, and the case without the prefix indicates normal.

"(Meth)acrylic acid" means at least one selected from acrylic acid and methacrylic acid.

"(Meth)acrylate" means at least one selected from acrylate and methacrylate.

"(Meth)acryloyl group" means at least one selected from an acryloyl group and a methacryloyl group.

"Styrene compound" means an unsubstituted or substituted styrene.

"Main chain" means a relatively longest bonding chain in an addition polymer.

The contents of an amorphous resin and a crystalline resin do not contain a resin contained in colorant particles and releasing agent particles.

[Amorphous Resin]

The amorphous resin is used as a binder resin of the toner, and contains the amorphous polyester resin (A) that is a polycondensate of an alcohol component (a) containing 80 mol% or more of an aliphatic diol (a1) and a carboxylic acid component (b), and the alcohol component (a) contains 60 mol% or more of an aliphatic diol (a2) having 5 or 6 carbon atoms and having an alkyl group on a side chain. The alcohol component (a) contains 80 mol% or more of an aliphatic diol (al), and further contains 60 mol% or more of an aliphatic diol (a2) having 5 or 6 carbon atoms and having an alkyl group on a side chain, and therefore the amorphous resin has a structure having a moiety that is highly hydrophobic.

[Amorphous Polyester Resin (A)]

The polyester resin (A) is a polycondensate of an alcohol component (a) and a carboxylic acid component (b), the alcohol component (a) contains 80 mol% or more of an aliphatic diol (a1), and further contains 60 mol% or more of an aliphatic diol (a2) having 5 or 6 carbon atoms and having an alkyl group on a side chain.

Examples of the aliphatic diol (a1) include aliphatic diols having 2 or more and 16 or less carbon atoms, for example, aliphatic diols (a2) described below; aliphatic diols such as ethylene glycol, 1,2-propanediol, 1,3-propanediol, 1,2-butanediol, 1,3-butanediol, 1,4-butanediol, 2,3-butanediol, 2-methyl-1,3-propanediol, 1,5-pentanediol, 1,6-hexanediol, 1,7-heptanediol, 1,8-octanediol, 1,9-nonanediol, 1,10-decanediol, 1,12-dodecanediol, and 1,4-butanediol; and alicyclic diols such as hydrogenated bisphenol A [2,2-bis(4-hydroxycyclohexyl)propane], and an adduct of an alkylene oxide having 2 or more and 4 or less carbon atoms (having an average molar number of addition of 2 or more and 12 or less) of hydrogenated bisphenol A. The aliphatic diol (a1) preferably contains an aliphatic diol (a2) and a linear aliphatic diol.

One alone or two or more kinds of the aliphatic diols (a1) may be used.

Examples of the aliphatic diol (a2) having 5 or 6 carbon atoms and having an alkyl group on a side chain include neopentyl glycol, 2-ethyl-2-methyl-1,3-propanediol, 2-methyl-1,4-butanediol, 2-ethyl-1,4-butanediol, 2,2-dimethyl-1,4-butanediol, 2,3-dimethyl-1,4-butanediol, 2-methyl-1,5-pentanediol, and 3-methyl-1,5-pentanediol. The aliphatic diol (a2) is preferably neopentyl glycol, 2-ethyl-2-methyl-1,3-propanediol, 2,2-dimethyl-1,4-butanediol, or 3-methyl-1,5-pentanediol, more preferably neopentyl glycol or 3-methyl-1,5-pentanediol.

The content of the aliphatic diol (a1) in the alcohol component (a) is 80 mol% or more, preferably 90 mol% or more, more preferably 95 mol% or more, and is 100 mol% or less, preferably 100 mol% from the viewpoint of enhancing the hydrophobicity at a moiety of the amorphous resin.

The content of the aliphatic diol (a2) in the alcohol component (a) is 60 mol% or more, preferably 80 mol% or more, more preferably 90 mol% or more, and is 100 mol% or less, preferably 100 mol% from the viewpoint of improving the dispersibility of the crystalline resin in the amorphous resin.

Examples of the alcohol component (a) except the aliphatic diols (a1) and (a2) include an alkylene oxide adduct of an aromatic diol, and a trihydric or higher alcohol.

The alkylene oxide adduct of an aromatic diol preferably contains an alkylene oxide adduct of bisphenol A represented by a formula (I):

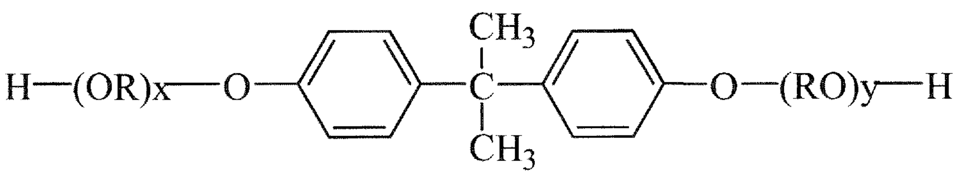

(I)

wherein OR and RO each represent an oxyalkylene group, R's each independently represent an ethylene group or a propylene group, x and y each represent an average molar number of addition of an alkylene oxide, and each are a positive number, a sum of x and y is 1 or more, preferably 1.5 or more, and is 16 or less, preferably 8 or less, more preferably 4 or less.

Examples of the alkylene oxide adduct of bisphenol A represented by the formula (I) include a propylene oxide adduct of 2,2-bis(4-hydroxyphenyl)propane, and an ethylene oxide adduct of 2,2-bis(4-hydroxyphenyl)propane.

Examples of the trihydric or higher alcohol include glycerol, pentaerythritol, trimethylolpropane, and sorbitol.

One alone or two or more kinds of the alcohol components (a) may be used.

Examples of the carboxylic acid component (b) include an aromatic dicarboxylic acid compound, an aliphatic dicarboxylic acid compound, and a tribasic or higher carboxylic acid compound.

Among these, the carboxylic acid component (b) preferably contains an aromatic dicarboxylic acid from the viewpoint of obtaining a toner having excellent charge property and durability.

From the above-mentioned viewpoint, the aromatic dicarboxylic acid compound is more preferably at least one selected from terephthalic acid and isophthalic acid.

The content of the aromatic dicarboxylic acid compound in the carboxylic acid component (b) is preferably 60 mol% or more, more preferably 70 mol% or more, even more preferably 80 mol% or more, and is preferably 100 mol% or less, more preferably 100 mol% from the viewpoint of obtaining a toner having excellent charge property and durability.

Examples of the aliphatic dicarboxylic acid compound include aliphatic dicarboxylic acids such as oxalic acid, malonic acid, maleic acid, fumaric acid, citraconic acid, itaconic acid, glutaconic acid, succinic acid optionally substituted with an aliphatic hydrocarbon group having 1 or more and 20 or less carbon atoms, and adipic acid.

Examples of the succinic acid substituted with an aliphatic hydrocarbon group having 1 or more and 20 or less

carbon atoms include octylsuccinic acid and dodecenylsuccinic acid (tetrapropenylsuccinic acid).

The content of the aliphatic dicarboxylic acid compound in the carboxylic acid component (b) is preferably 40 mol% or less, more preferably 30 mol% or less, even more preferably 20 mol% or less, and is 0 mol% or more, preferably 0 mol% from the viewpoint of improving the dispersibility of the crystalline resin in the amorphous resin.

Examples of the tribasic or higher carboxylic acid compound include 1,2,4-benzenetricarboxylic acid (trimellitic acid), 2,5,7-naphthalenetricarboxylic acid, and pyromellitic acid. Among these, trimellitic acid and an anhydride thereof are preferred.

The content of the tribasic or higher carboxylic acid compound in the carboxylic acid component (b) is preferably 60 mol% or less, more preferably 30 mol% or less, even more preferably 10 mol% or less, and is 0 mol% or more from the viewpoint of low-temperature fusing property.

The alcohol component (a) may appropriately contain a monohydric alcohol, and the carboxylic acid component (b) may appropriately contain a monobasic carboxylic acid component.

The equivalent ratio of the carboxy group in the carboxylic acid component to the hydroxy group in the alcohol component (a) (COOH group/OH group) is preferably 0.7 or more, more preferably 0.8 or more, and is preferably 1.3 or less, more preferably 1.2 or less.

(Method for Producing Polyester Resin (A))

The resin (A) may be produced, for example, by polycondensation of raw materials monomer containing the alcohol component (a) and the carboxylic acid component (b).

Polycondensation of the alcohol component (a) and the carboxylic acid component (b) can be carried out, for example, in an inert gas atmosphere, if necessary, in the presence of an esterification catalyst, an esterification promoter, a polymerization inhibitor, and the like, at a temperature of about 120°C or higher and 250°C or lower.

Examples of the esterification catalyst include tin compounds such as dibutyl tin oxide, and tin(II) di(2-ethylhexanoate), and titanium compounds such as titanium diisopropoxybis(triethanolaminate). Examples of an esterification promoter usable with the esterification catalyst include gallic acid.

The amount of the esterification catalyst to be used is preferably 0.01 parts by mass or more and 10 parts by mass or less relative to 100 parts by mass of the total amount of the alcohol component (a) and the carboxylic acid component (b) as the raw material monomers of the resin (A).

The amount of the esterification promoter to be used is preferably 0.001 parts by mass or more and 1 part by mass or less relative to 100 parts by mass of the total amount of the alcohol component (a) and the carboxylic acid component (b).

Examples of the polymerization inhibitor include a radical polymerization inhibitor such as 4-tert-butylcatechol.

In the case of using the polymerization inhibitor, the amount of the polymerization inhibitor to be used is preferably 0.001 parts by mass or more and 1 part by mass or less relative to 100 parts by mass of the total amount of the alcohol component (a) and the carboxylic acid component (b).

(Properties of Polyester Resin (A))

The softening point of the resin (A) is preferably 70°C or higher, more preferably 80°C or higher, even more preferably 90°C or higher from the viewpoint of heat-resistant storage stability, and is preferably 130°C or lower, more preferably 120°C or lower, even more preferably 110°C or lower from the viewpoint of low-temperature fusing property.

The glass transition temperature of the resin (A) is preferably 30°C or higher, more preferably 35°C or higher, even more preferably 40°C or higher from the viewpoint of heat-resistant storage stability, and is preferably 80°C or lower, more preferably 70°C or lower, even more preferably 65°C or lower from the viewpoint of low-temperature fusing property.

The acid value of the resin (A) is preferably 5 mgKOH/g or more, more preferably 8 mgKOH/g or more, even more preferably 10 mgKOH/g or more, and is preferably 40 mgKOH/g or less, more preferably 30 mgKOH/g or less, even more preferably 25 mgKOH/g or less.

The softening point, the glass transition temperature, and the acid value of the resin (A) can be appropriately controlled depending on the kind and the amount of the raw material monomers used, and on the production conditions such as the reaction temperature, the reaction time, and the cooling speed, and the values can be determined according to the methods described in the section of Examples.

In the case where two or more kinds of the resins (A) are used as combined, preferably, the softening point, the glass transition temperature, and the acid value of the mixture each fall within the above-mentioned range.

[Amorphous polyester-based Resin (B)]

The amorphous resin may contain an amorphous polyester-based resin (B) except the resin (A) (hereinafter sometimes simply referred to as "resin (B)").

Examples of the resin (B) include a polyester resin and a modified polyester resin. Examples of the modified polyester resin include a urethane modified product of a polyester resin, an epoxy modified product of a polyester resin, and a composite resin containing a polyester resin segment and addition polymer resin segment. Among these, a polyester resin that is a polycondensate of an alcohol component and a carboxylic acid component is preferred.

Examples of the alcohol component of the resin (B) include an alkylene oxide adduct of an aromatic diol, an aliphatic diol, an alicyclic diol, and a trihydric or higher alcohol. As the alkylene oxide adduct of an aromatic diol, the alkylene oxide adduct of bisphenol A represented by the formula (I) in the above-mentioned resin (A) is exemplified, and preferable ranges are the same as those in the resin (A).

Examples of the aliphatic diol include ethylene glycol, 1,2-propanediol, 1,3-propanediol, 1,2-butanediol, 1,3-butanediol, 1,4-butanediol, 2,3-butanediol, neopentyl glycol, 1,6-hexanediol, 1,8-octanediol, 1,9-nonanediol, 1,10-decanediol, and 1,12-dodecanediol. As the aliphatic diol, the aliphatic diol described in the aliphatic diol (a2) of the resin (A) can be used, and in this case, the content of the aliphatic diol corresponding to the aliphatic diol (a2) in the alcohol component of the resin (B) is less than 60 mol%.

The content of the aliphatic diol in the alcohol component is preferably 80 mol% or more, more preferably 90 mol% or more, even more preferably 95 mol% or more, and is 100 mol% or less, more preferably 100 mol%.

As the alicyclic diol and the trihydric or higher alcohol, the alicyclic diol and the trihydric or higher alcohol, respectively, in the above-mentioned resin (A) are exemplified, and preferable ranges are the same as those in the resin (A).

As the carboxylic acid component of the resin (B), the carboxylic acid component of the resin (A) is exemplified similarly, and specific examples include an aromatic dicarboxylic acid compound, an aliphatic dicarboxylic acid compound, and a tribasic or higher carboxylic acid compound. Among these, terephthalic acid, isophthalic acid, and fumaric acid are preferred.

The amount of the aromatic dicarboxylic acid in the carboxylic acid component is preferably 30 mol% or more, more preferably 40 mol% or more, even more preferably 50 mol% or more, and is preferably 100 mol% or less, more preferably 90 mol% or less, even more preferably 80 mol% or less.

The amount of the aliphatic dicarboxylic acid in the carboxylic acid component is preferably 0 mol% or more, more preferably 10 mol% or more, even more preferably 20 mol% or more, and is preferably 70 mol% or less, more preferably 60 mol% or less, even more preferably 50 mol% or less.

In the case of containing a tribasic or higher carboxylic acid, the amount of the tribasic or higher carboxylic acid in the carboxylic acid component is preferably 3 mol% or more, more preferably 5 mol% or more, even more preferably 8 mol% or more, and is preferably 30 mol% or less, more preferably 20 mol% or less, even more preferably 15 mol% or less.

One alone or two or more kinds of the carboxylic acids may be used.

The equivalent ratio of the carboxy group in the carboxylic acid component to the hydroxy group in the alcohol component [COOH group/OH group] is preferably 0.7 or more, more preferably 0.8 or more, and is preferably 1.3 or less, more preferably 1.2 or less.

In the case where the resin (B) is a composite resin, the same composite resin as a composite resin (D) described below can be used.

(Method for Producing Amorphous Polyester-based Resin (B))

In the case where the resin (B) is a polyester resin, the resin (B) can be produced by the same method as the method for producing the polyester resin (A), and a reaction condition and the like are the same as those in the method for producing the polyester resin (A).

In the case where the resin (B) is a composite resin containing a polyester resin segment and an addition polymer resin segment, the resin (B) may be produced, for example, by the same method as a method for producing the composite resin (D) described below.

(Properties of Amorphous Polyester-based Resin (B))

The softening point of the resin (B) is preferably 70°C or higher, more preferably 90°C or higher, even more preferably 95°C or higher, and from the viewpoint of improving the low-temperature fusing property, is preferably 150°C or lower, more preferably 140°C or lower, even more preferably 125°C or lower.

The glass transition temperature of the resin (B) is preferably 30°C or higher, more preferably 35°C or higher, even more preferably 40°C or higher, and from the viewpoint of improving the low-temperature fusing property, is

preferably 80°C or lower, more preferably 70°C or lower, even more preferably 65°C or lower.

The acid value of the resin (B) is preferably 5 mgKOH/g or more, more preferably 10 mgKOH/g or more, even more preferably 15 mgKOH/g or more, and is preferably 40 mgKOH/g or less, more preferably 35 mgKOH/g or less, even more preferably 30 mgKOH/g or less.

The softening point, the glass transition temperature, and the acid value of the resin (B) can be appropriately controlled depending on the kind and the amount of the raw material monomers used, and on the production conditions such as the reaction temperature, the reaction time, and the cooling speed, and the values can be determined according to the methods described in the section of Examples.

In the case where two or more kinds of the resins (B) are used as combined, preferably, the softening point, the glass transition temperature, and the acid value of the mixture each fall within the above-mentioned range.

The content of the amorphous polyester resin (A) in the amorphous resin contained in toner particles having no core-shell structure or if the toner particles have a core-shell structure, in the core portion, is preferably 90 mass% or more, more preferably 92 mass% or more, even more preferably 95 mass% or more, and is preferably 100 mass% or less, more preferably 100 mass% from the viewpoint of improving the dispersibility of the crystalline resin in the amorphous resin.

The component contained in the amorphous resin, except the resin (A), includes the resin (B), and may contain a resin such as a polyester resin.

[Crystalline Resin]

The crystalline resin is used as the binder resin of the toner, and contains the crystalline polyester resin (C) that is a polycondensate of an aliphatic alcohol (c) and a carboxylic acid component (d). Since the resin (C) has a structure derived from the aliphatic alcohol (c), the resin (C) is susceptible to a hydrophobic interaction with the resin (A).

[Crystalline Polyester Resin (Resin (C))]

The resin (C) is a polycondensate of the aliphatic alcohol (c) and the carboxylic acid component (d).

The aliphatic alcohol (c) contains a linear aliphatic diol. The number of carbon atoms of the linear aliphatic diol is preferably 2 or more, more preferably 4 or more, even more preferably 6 or more, and is preferably 16 or less, more preferably 14 or less, even more preferably 12 or less.

Examples of the linear aliphatic diol include ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,15-pentadecanediol, and 1,16-hexadecanediol. Among these, a linear aliphatic diol having 2 or more and 12 or less carbon atoms is preferred, and ethylene glycol, 1,6-hexanediol, 1,10-decanediol, and 1,12-dodecanediol are preferred. One alone or two or more kinds of the linear aliphatic diols may be used.

The content of the linear aliphatic diol in the alcohol component (c) is preferably 80 mol% or more, more preferably 85 mol% or more, even more preferably 90 mol% or more, further more preferably 95 mol% or more, and is 100 mol% or less, more preferably 100 mol% from the viewpoint of improving the dispersibility of the crystalline resin in the amorphous resin.

The alcohol component (c) may contain any other alcohol component different from the linear aliphatic diol. Examples of the other alcohol component include an aliphatic diol except the linear aliphatic diol, an aromatic diol, and a trihydric or higher alcohol except the linear aliphatic diol. One alone or two or more kinds of the alcohol components may be used.

The carboxylic acid component (d) preferably contains an aliphatic dicarboxylic acid.

The number of carbon atoms of the aliphatic dicarboxylic acid is preferably 4 or more, more preferably 8 or more, even more preferably 10 or more, and is preferably 14 or less, more preferably 12 or less from the viewpoint of improving the dispersibility of the crystalline resin in the amorphous resin.

Examples of the aliphatic dicarboxylic acid include fumaric acid, succinic acid, adipic acid, sebacic acid, dodecanedioic acid, and tetradecanedioic acid. Among these, fumaric acid, sebacic acid, and dodecanedioic acid are preferred. One alone or two or more kinds of the carboxylic acids may be used.

The amount of the aliphatic dicarboxylic acid in the carboxylic acid component is preferably 80 mol% or more, more preferably 85 mol% or more, and is preferably 100 mol% or less from the viewpoint of improving the dispersibility of the crystalline resin in the amorphous resin.

The carboxylic acid component may contain any other carboxylic acid component different from aliphatic dicarboxylic acids. Examples of the other carboxylic acid component include monobasic carboxylic acids such as stearic acid; aromatic dicarboxylic acids such as terephthalic acid and isophthalic acid; and a tribasic or higher carboxylic acid. One alone or two or more kinds of the carboxylic acid components may be used.

The equivalent ratio of the carboxy group in the carboxylic acid component to the hydroxy group in the alcohol

component (COOH group/OH group) is preferably 0.7 or more, more preferably 0.8 or more, and is preferably 1.3 or less, more preferably 1.2 or less.

(Properties of Resin (C))

The softening point of the resin (C) is preferably 60°C or higher, more preferably 65°C or higher, even more preferably 70°C or higher from the viewpoint of heat-resistant storage stability, and is preferably 150°C or lower, more preferably 120°C or lower, even more preferably 110°C or lower from the viewpoint of low-temperature fusing property.

The melting point of the resin (C) is preferably 50°C or higher, more preferably 55°C or higher, even more preferably 60°C or higher from the viewpoint of heat-resistant storage stability, and is preferably 140°C or lower, more preferably 110°C or lower, even more preferably 100°C or lower from the viewpoint of low-temperature fusing property.

The acid value of the resin (C) is preferably 5 mgKOH/g or more, more preferably 8 mgKOH/g or more, and is preferably 25 mgKOH/g or less, more preferably 20 mgKOH/g or less.

The softening point, the melting point, and the acid value of the resin (C) can be appropriately controlled depending on the kind and the ratio of raw material monomers, and the production conditions such as the reaction temperature, the reaction time, and the cooling speed. The values are determined according to the methods described in the section of Examples. In the case where two or more kinds of the resins (C) are used as combined, preferably, the softening point, the melting point, and the acid value of the mixture each fall within the above-mentioned range.

The resin (C) can be produced, for example, by polycondensation of the alcohol component (c) and the carboxylic acid component (d). As the condition for polycondensation, for example, the condition provided in polycondensation in the resin (A) can be adopted.

The content of the crystalline polyester resin (C) in the crystalline resin is preferably 90 mass% or more, more preferably 92 mass% or more, even more preferably 95 mass% or more, further more preferably 97 mass% or more, and is preferably 100 mass% or less, preferably 100 mass% from the viewpoint of obtaining a toner having excellent low-temperature fusing property.

The total content of the resin (A) in the amorphous resin and the resin (C) in the crystalline resin contained in toner particles having no core-shell structure or if the toner particles have a core-shell structure, in the core portion, is preferably 80 mass% or more, more preferably 90 mass% or more, and is preferably 100 mass% or less, more preferably 100 mass% from the viewpoint of improving the dispersibility of the crystalline resin in the amorphous resin.

The ratio by mass of the resin (C) to the resin (A) (resin (C)/resin (A)) is preferably 5/95 or more, more preferably 10/90 or more, even more preferably 15/85 or more, and is preferably 40/60 or less, more preferably 30/70 or less, even more preferably 25/75 or less from the viewpoint of improving the dispersibility of the crystalline resin in the amorphous resin.

In addition to the amorphous resin and the crystalline resin, the toner of the present invention may contain at least one of a colorant or a releasing agent. The toner particles preferably contain both the colorant and the releasing agent. The toner particles contained in the toner of the present invention may have a core-shell structure. Due to the presence of the core-shell structure, the charge property and the durability of the toner can be improved. In the case where the toner particles have a core-shell structure, the core portion preferably contains both the colorant and the releasing agent.

[Method for Producing Toner]

A method for producing a toner according to an embodiment of the present invention may be any known method such as a melt-kneading method, an emulsification phase-transfer method, a suspension polymerization method, and an emulsification aggregation method, and is preferably an emulsification aggregation method. The emulsification aggregation method includes a step of aggregating in an aqueous medium resin particles into which the amorphous resin and the crystalline resin are incorporated together or separately, and a coalescing step.

In the step of aggregating the resin particles, the resin particles into which the amorphous resin and the crystalline resin are incorporated together or separately are aggregated in an aqueous medium to obtain aggregated particles 1. At that time, in addition to the resin particles, at least one of the colorant or the releasing agent is preferably aggregated, and a resin particle dispersion containing the resin particles, a colorant particle dispersion containing colorant particles containing the colorant, and/or a releasing agent particle dispersion containing releasing agent particles containing the releasing agent are more preferably mixed to aggregate the particles. The resin particle dispersion, the colorant particle dispersion, and the releasing agent particle dispersion are even more preferably an aqueous dispersion of the resin particles, an aqueous dispersion of the colorant particles, and an aqueous dispersion of the releasing agent particles, respectively.

[Method for Producing Resin Particles]

The resin particles of the amorphous resin and the resin particles of the crystalline resin may be produced as an aqueous dispersion of the resin particles into which the amorphous resin and the crystalline resin are incorporated together or separately. As an aqueous medium used in the aqueous dispersion, an aqueous dispersion containing water as a main component is preferred.

Dispersing can be carried out according to a known method, but dispersion according to a phase-transfer emulsification method is preferred. Examples of the phase-transfer emulsification method include a phase-transfer emulsification method in which an aqueous medium is added to an organic solvent solution of the amorphous resin and/or the crystalline resin or the melted amorphous resin and/or the melted crystalline resin. The phase-transfer emulsification method in which an aqueous medium is added to an organic solvent solution of a resin is preferred. For example, an aqueous dispersion of the resin particles into which the amorphous resin and the crystalline resin are incorporated together can be produced through phase-transfer emulsification in which an aqueous medium is added to an organic solvent solution of the amorphous resin and the crystalline resin.

The organic solvent for use for phase-transfer emulsification is not particularly limited as long as it can dissolve the amorphous resin and the crystalline resin and is watersoluble, and examples thereof include methyl ethyl ketone.

To the organic solvent solution, a neutralizing agent may be added. Examples of the neutralizing agent include a basic substance. Examples of the basic substance include alkali metal hydroxides such as sodium hydroxide and potassium hydroxide; and nitrogen-containing basic substances such as ammonia, trimethylamine, and diethanolamine. Among these, alkali metal hydroxides such as sodium hydroxide and potassium hydroxide are preferred.

The degree of neutralization of the amorphous resin and/or the crystalline resin contained in the resin particles is preferably 10 mol% or more, more preferably 20 mol% or more, even more preferably 30 mol% or more, further more preferably 40 mol% or more, and is preferably 100 mol% or less, more preferably 80 mol% or less, even more preferably 70 mol% or less.

The degree of neutralization of the amorphous resin and/or the crystalline resin contained in the resin particles can be determined by the following expression.

Degree of neutralization (mol%) = [{mass of neutralizing agent added (g)/equivalent of neutralizing agent}/[{weighted average acid value of resin constituting resin particles (mgKOH/g) $\times$ mass of resin constituting resin particles (g)}/(56 $\times$ 1000)]]$\times$100

With stirring the organic solvent solution or the melted resin, an aqueous medium is gradually added thereto for phase transfer.

The temperature of the organic solvent solution at the time when an aqueous medium is added thereto is preferably equal to or higher than the glass transition temperature of the resin (A), more preferably 60°C or higher, even more preferably 65°C or higher, further more preferably 70°C or higher, and is preferably 100°C or lower, more preferably 90°C or lower, even more preferably 80°C or lower from the viewpoint of improving the dispersion stability of the resin particles containing the amorphous resin and/or the crystalline resin.

After phase-transfer emulsification, if neccesary, the organic solvent may be removed from the resultant dispersion through distillation or the like. The resin particles may be isolated through filtration or the like. In the aggregating step and the coalescing step in the present invention, the aqueous dispersion of the resin particles obtained by removing the organic solvent from the resultant dispersion after phase-transfer emulsification is preferably used. In this case, the remaining amount of the organic solvent in the dispersion is preferably 1 mass% or less, more preferably 0.5 mass% or less, even more preferably substantially 0 mass%.

The volume median particle diameter $D_{50}$ of the resin particles in the dispersion is preferably 0.05 $\mu$m or more, more preferably 0.08 $\mu$m or more, and is preferably 1 $\mu$m or less, more preferably 0.5 $\mu$m or less, even more preferably 0.3 $\mu$m or less.

The CV value of the resin particles in the dispersion is preferably 10% or more, more preferably 20% or more, and is preferably 40% or less, more preferably 35% or less.

The solid concentration in the aqueous dispersion of the resin particles is preferably 5 mass% or more, more preferably 10 mass% or more, even more preferably 15 mass% or more, and is preferably 50 mass% or less, more preferably 40 mass% or less, even more preferably 30 mass% or less, further more preferably 25 mass% or less from the viewpoint of improving the productivity of the toner and improving the dispersion stability of the aqueous dispersion of the resin particles.

The solid content is the total amount of nonvolatile components.

In the step of aggregating the resin particles, the aggregated particles 1 may contain the colorant and/or the releasing agent, and may further contain additives such as a charge control agent, a magnetic powder, a fluidity enhancer, a conductivity control agent, a reinforcing filler such as a fibrous substance, an antioxidant, an anti-aging agent, and a cleaning property enhancer.

[Aqueous Medium]

In the present invention, the aqueous medium is a medium containing water as a main component, and the content of water in the aqueous medium is preferably 70 mass% or more, more preferably 80 mass% or more, even more preferably 90 mass% or more, and is 100 mass% or less.

As a component other than water that can form the aqueous medium with water, an organic solvent to be dissolved in water, such as an alkyl alcohol having 1 or more and 5 or less carbon atoms; a dialkyl ketone having 3 or more and 5 or less carbon atoms such as acetone or methyl ethyl ketone; or a cyclic ether such as tetrahydrofuran is used. Among these, an alkyl alcohol having 1 or more and 5 or less carbon atoms is preferred, and ethanol is more preferred.

[Colorant]

As the colorant, a dye, a pigment, or the like used as a colorant for toner can be used.

Examples of the colorant include carbon black, phthalocyanine blue, permanent brown FG, brilliant fast scarlet, pigment green B, rhodamine-B base, solvent red 49, solvent red 146, solvent blue 35, quinacridone, carmine 6B, and disazo yellow. The toner may be a black toner or a color toner other than black.

(Colorant Particle Dispersion)

The colorant particles in the form of the dispersion are preferably mixed with the resin particles, aggregated, and incorporated into the aggregated particles 1, and the colorant and the aqueous medium are preferably dispersed with a dispersing machine such as a homogenizer or a ultrasonic dispersing machine for use. The dispersing is preferably carried out in the presence of an addition polymer (hereinafter an addition polymer used in dispersing the colorant is also referred to as "addition polymer E") or a surfactant from the viewpoint of improving the dispersion stability of the colorant.

Examples of the surfactant include a nonionic surfactant, an anionic surfactant, and a cationic surfactant.

Preferably, the addition polymer E has a constituent unit derived from an addition-polymerizable monomer a having an aromatic group, and further contains at least one selected from the group consisting of an addition-polymerizable monomer b having an ionizable group, an addition-polymerizable monomer c having a polyalkylene oxide group, and a macromonomer d. The colorant particle dispersion and the addition polymer E refer to an addition polymer E described in JP 2021-026129 A.

[Releasing agent]

Examples of the releasing agent include a polypropylene wax, a polyethylene wax, a polypropylene-polyethylene copolymer wax; hydrocarbon waxes such as a microcrystalline wax, a paraffin wax, a Fischer-Tropsch wax, and a Sasol wax, and oxides thereof; ester waxes such as a carnauba wax, a montan wax or a deoxygenated wax thereof, and a fatty acid ester wax; fatty acid amides, fatty acids, higher alcohols, and fatty acid metal salts. One alone or two or more kinds of the releasing agents may be used.

The melting point of the releasing agent is preferably 60°C or higher, more preferably 70°C or higher, and is preferably 160°C or lower, more preferably 140°C or lower, even more preferably 120°C or lower, further more preferably 100°C or lower.

The content of the releasing agent is preferably 0.1 mass% or more, more preferably 1 mass% or more, even more preferably 3 mass% or more, and is preferably 20 mass% or less, more preferably 15 mass% or less, even more preferably 10 mass% or less, in the toner particles.

(Releasing Agent Particle Dispersion)

The releasing agent particle dispersion can also be obtained using a surfactant, and is preferably prepared by mixing the releasing agent and resin particles S described below. By preparing the releasing agent particles using the releasing agent and the resin particles S, the resin particles S stabilize the releasing agent particles, and therefore the releasing agent can be dispersed in the aqueous medium even without using a surfactant. It is considered that in the releasing agent particle dispersion, a structure in which a large number of the resin particles S are attached to the surfaces of the releasing agent particles is present.

A resin constituting the resin particles S for dispersing the releasing agent is preferably a polyester-based resin, and a composite resin (D) having a polyester resin segment and an addition polymer resin segment is more preferably used.

[Composite Resin (D)]

The composite resin (D) is a modified polyester resin, and examples thereof include a composite resin containing a polyester resin segment and an addition polymer resin segment.
Examples of an alcohol component of the composite resin (D) include an alkylene oxide adduct of an aromatic diol, an aliphatic diol, an alicyclic diol, and a trihydric or higher alcohol. As the alkylene oxide adduct of an aromatic diol, the alkylene oxide adduct of bisphenol A represented by the formula (I) in the resin (A) described above is exemplified, and preferable ranges are the same as those in the resin (A).
The content of the alkylene oxide adduct of bisphenol A in the alcohol component is preferably 80 mol% or more, more preferably 90 mol% or more, even more preferably 95 mol% or more, and is 100 mol% or less, more preferably 100 mol%.
Examples of the aliphatic diol include ethylene glycol, 1,2-propanediol, 1,3-propanediol, 1,2-butanediol, 1,3-butanediol, 1,4-butanediol, 2,3-butanediol, neopentyl glycol, 1,6-hexanediol, 1,8-octanediol, 1,9-nonanediol, 1,10-decanediol, and 1,12-dodecanediol.
As the alicyclic diol and the trihydric or higher alcohol, the alicyclic diol and the trihydric or higher alcohol, respectively, in the resin (A) described above are exemplified, and preferable ranges are the same as those in the resin (A).
As a carboxylic acid component of the composite resin (D), the carboxylic acid component of the resin (A) described above is exemplified similarly, and specific examples include an aromatic dicarboxylic acid compound, an aliphatic dicarboxylic acid compound, and a tribasic or higher carboxylic acid compound. Among these, terephthalic acid and succinic acid are preferred.
The amount of the aromatic dicarboxylic acid in the carboxylic acid component is preferably 20 mol% or more, more preferably 30 mol% or more, even more preferably 40 mol% or more, and is preferably 90 mol% or less, more preferably 80 mol% or less, even more preferably 75 mol% or less.
The amount of the aliphatic dicarboxylic acid in the carboxylic acid component is preferably 10 mol% or more, more preferably 20 mol% or more, even more preferably 25 mol% or more, and is preferably 80 mol% or less, more preferably 70 mol% or less, even more preferably 60 mol% or less.
In the case of containing a tribasic or higher carboxylic acid, the amount of the tribasic or higher carboxylic acid in the carboxylic acid component is preferably 3 mol% or more, more preferably 5 mol% or more, even more preferably 8 mol% or more, and is preferably 30 mol% or less, more preferably 20 mol% or less, even more preferably 15 mol% or less.
One alone or two or more kinds of the carboxylic acids may be used.
The equivalent ratio of the carboxy group in the carboxylic acid component to the hydroxy group in the alcohol component [COOH group/OH group] is preferably 0.7 or more, more preferably 0.8 or more, and is preferably 1.3 or less, more preferably 1.2 or less.
Examples of the addition polymer resin segment of the composite resin (D) include an addition polymer of a raw monomer containing a styrene compound.
Examples of the styrene compound include unsubstituted and substituted styrenes. Examples of a substituent for the substituted styrene include an alkyl group having 1 or more and 5 or less carbon atoms, a halogen atom, an alkoxy group having 1 or more and 5 or less carbon atoms, a sulfonic acid group, and salts thereof.
Examples of the styrene compound include styrene, methylstyrene, $\alpha$-methylstyrene, $\beta$-methylstyrene, tert-butylstyrene, chlorostyrene, chloromethylstyrene, methoxystyrene, and styrenesulfonic acid, and salts thereof. Among these, styrene is preferred.
In the raw material monomer for the addition polymer resin segment, the content of the styrene compound is preferably 50 mass% or more, more preferably 65 mass% or more, even more preferably 75 mass% or more, and is 100 mass% or less, preferably 95 mass% or less, more preferably 90 mass% or less, even more preferably 85 mass% or less.
Examples of the raw material monomer other than the styrene compound include (meth)acrylates such as alkyl (meth)acrylates, benzyl (meth)acrylate, and dimethylaminoethyl (meth)acrylate; olefins such as ethylene, propylene, and butadiene; halovinyl compounds such as vinyl chloride; vinyl esters such as vinyl acetate and vinyl propionate; vinyl ethers such as methyl vinyl ether; vinylidene halides such as vinylidene chloride; and N-vinyl compounds such as N-vinylpyrrolidone. Among these, (meth)acrylates are preferred, and alkyl (meth)acrylates are more preferred.
The number of carbon atoms of an alkyl group in an alkyl (meth)acrylate is preferably 1 or more, more preferably 4 or more, even more preferably 6 or more, and is preferably 24 or less, more preferably 22 or less, even more preferably 20 or less.
Examples of the alkyl (meth)acrylate include methyl (meth)acrylate, ethyl (meth)acrylate, (iso)propyl (meth)acrylate, (iso or tertiary)butyl (meth)acrylate, (iso)amyl (meth)acrylate, cyclohexyl (meth)acrylate, 2-ethylhexyl (meth)acrylate, (iso)octyl (meth)acrylate, (iso)decyl (meth)acrylate, (iso)dodecyl (meth)acrylate, (iso)palmityl (meth)acrylate, (iso)stearyl (meth)acrylate, and (iso)behenyl (meth)acrylate. 2-ethylhexyl (meth)acrylate and stearyl (meth)acrylate are preferred, stearyl (meth)acrylate is more preferred, and stearyl methacrylate is even more preferred.

In the raw material monomer for the addition polymer resin segment, the content of the (meth)acrylate is preferably 5 mass% or more, more preferably 10 mass% or more, even more preferably 15 mass% or more, and is preferably 50 mass% or less, more preferably 35 mass% or less, even more preferably 25 mass% or less.

The total amount of the styrene compound and the (meth)acrylate in the raw material monomer for the addition polymer resin segment is preferably 80 mass% or more, more preferably 90 mass% or more, even more preferably 95 mass% or more, further more preferably 100 mass%.

The composite resin (D) preferably has a constituent unit derived from a bireactive monomer bonding to the polyester resin segment and the addition polymer resin segment via a covalent bond.

"Constituent unit derived from a bireactive monomer" means a unit formed by a reaction of a functional group and an addition-polymerizing group of the bireactive monomer.

Examples of the addition-polymerizing group include a carbon-carbon unsaturated bond (ethylenically unsaturated bond).

Examples of the bireactive monomer include an addition-polymerizable monomer having at least one functional group selected from a hydroxy group, a carboxy group, an epoxy group, a primary amino group, and a secondary amino group in the molecule. Among these, from the viewpoint of reactivity, an addition-polymerizable monomer having at least one functional group selected from a hydroxy group and a carboxy group is preferred, and an addition-polymerizable monomer having a carboxy group is more preferred.

Examples of the addition-polymerizable monomer having a carboxy group include acrylic acid, methacrylic acid, fumaric acid, and maleic acid. Among these, acrylic acid and methacrylic acid are preferred, and acrylic acid is more preferred from the viewpoint of reactivity in both polycondensation reaction and addition polymerization reaction.

In the case where the bireactive monomer is an addition-polymerizable monomer having a carboxy group, the amount of the constituent unit derived from the bireactive monomer is preferably 1 part by mole or more, more preferably 5 parts by mole or more, even more preferably 8 parts by mole or more, and is preferably 30 parts by mole or less, more preferably 25 parts by mole or less, even more preferably 20 parts by mole or less, relative to 100 parts by mole of the alcohol component of the polyester resin segment of the composite resin (D).

The content of the polyester resin segment in the composite resin (D) is preferably 35 mass% or more, more preferably 45 mass% or more, even more preferably 50 mass% or more, and is preferably 90 mass% or less, more preferably 85 mass% or less, even more preferably 75 mass% or less.

The content of the addition polymer resin segment in the composite resin (D) is preferably 5 mass% or more, more preferably 15 mass% or more, even more preferably 25 mass% or more, and is preferably 60 mass% or less, more preferably 55 mass% or less, even more preferably 45 mass% or less.

The amount of the bireactive monomer-derived constituent unit in the composite resin (D) is preferably 0.1 mass% or more, more preferably 0.5 mass% or more, even more preferably 0.8 mass% or more, and is preferably 10 mass% or less, more preferably 7 mass% or less, even more preferably 4 mass% or less.

The total amount of the polyester resin segment, the addition polymer resin segment, and the bireactive monomer-derived constituent unit in the composite resin (D) is preferably 80 mass% or more, more preferably 90 mass% or more, even more preferably 95 mass% or more, and is 100 mass% or less, more preferably 100 mass%.

The above amount is calculated on the basis of the ratio of the amounts of the polyester resin segment, the raw material monomer for the addition polymer resin segment, the bireactive monomer, and a radical polymerization initiator, and the masses of the polyester resin segment and the like are based on the mass excluding the mass of water produced by polycondensation. In the case where a radical polymerization initiator is used, the mass of the radical polymerization initiator is calculated as included in the addition polymer resin segment.

(Method for Producing Composite Resin (D))

In the case where the composite resin (D) is the composite resin containing the polyester resin segment and the addition polymer resin segment, the composite resin (D) may be produced, for example, by a method including a step A of polycondensing the alcohol component and the carboxylic acid component, and a step B of addition-polymerizing the raw material monomer for the addition polymer resin segment and the bireactive monomer.

The step B may be carried out after the step A, or the step A may be carried out after the step B, or the step A and the step B may be carried out simultaneously.

In the step A, preferably, a part of the carboxylic acid component is subjected to a polycondensation reaction, the step B is then carried out, the remaining part of the carboxylic acid component is added to the polymerization system, and the polycondensation reaction in the step A and the polycondensation reaction of the carboxy group of the bireactive monomer or the constituent moiety derived from the bireactive monomer are further carried out.

In the step A, if necessary, the esterification catalyst and the esterification promoter described in the section of the method for producing the polyester resin (A) may be used in the same amounts for polycondensation.

In the case where a monomer having an unsaturated bond, such as fumaric acid, is used for polycondensation,

if necessary, the polymerization inhibitor described in the section of the method for producing the polyester resin (A) may be used in the same amount.

The polycondensation reaction temperature is preferably 120°C or higher, more preferably 160°C or higher, even more preferably 180°C or higher, and is preferably 250°C or lower, more preferably 240°C or lower. Polycondensation may be carried out in an inert gas atmosphere.

Examples of the radical polymerization initiator in the addition polymerization in the step B include peroxides such as dibutyl peroxide; persulfates such as sodium persulfate; and azo compounds such as 2,2'-azobis(2,4-dimethylvaleronitrile).

The amount of the radical polymerization initiator to be used is preferably 1 part by mass or more and 20 parts by mass or less relative to 100 parts by mass of the raw material monomer for the addition polymer resin segment.

The temperature of the addition polymerization is preferably 110°C or higher, more preferably 130°C or higher, and is preferably 230°C or lower, more preferably 220°C or lower, even more preferably 210°C or lower.

The softening point of the composite resin (D) is preferably 70°C or higher, more preferably 80°C or higher, even more preferably 85°C or higher, and is preferably 140°C or lower, more preferably 120°C or lower, even more preferably 100°C or lower.

The glass transition temperature of the composite resin (D) is preferably 30°C or higher, more preferably 35°C or higher, even more preferably 40°C or higher, and from the viewpoint of improving the low-temperature fusing property, is preferably 80°C or lower, more preferably 70°C or lower, even more preferably 60°C or lower.

The acid value of the composite resin (D) is preferably 5 mgKOH/g or more, more preferably 10 mgKOH/g or more, even more preferably 15 mgKOH/g or more, further more preferably 20 mgKOH/g or more, and is preferably 40 mgKOH/g or less, more preferably 35 mgKOH/g or less, even more preferably 30 mgKOH/g or less from the viewpoint of obtaining fine resin particles and from the viewpoint of obtaining a dispersion of fine releasing agent particles.

The softening point, the glass transition temperature, and the acid value of the composite resin (D) can be appropriately controlled depending on the kind and the amount of the raw material monomer used, and on the production conditions such as the reaction temperature, the reaction time and the cooling speed, and the values can be determined according to the methods described in the section of Examples.

In the case where two or more kinds of the composite resin (D) are used as combined, preferably, the softening point, the glass transition temperature, and the acid value of the mixture each fall within the above-mentioned range.

The dispersion of the resin particles S can be prepared, for example, according to the above-mentioned phase-transfer emulsification method.

The volume median particle diameter $D_{50}$ of the resin particles S is preferably 0.01 μm or more, more preferably 0.03 μm or more, and is preferably 3.0 μm or less, more preferably 1.0 μm or less from the viewpoint of dispersion stability of the releasing agent particles.

The CV value of the resin particles S is preferably 10% or more, more preferably 15% or more, and is preferably 40% or less, more preferably 35% or less, even more preferably 30% or less from the viewpoint of dispersion stability of the releasing agent particles.

The volume median particle diameter $D_{50}$ and the CV value of the resin particles S are measured according to the methods described in the section of Examples.

The releasing agent particle dispersion can be prepared, for example, by dispersing the releasing agent and the dispersion of the resin particles S, and if necessary, an aqueous medium at a temperature equal to or higher than the melting point of the releasing agent using a dispersing machine such as a homogenizer, a high-pressure dispersing machine, or an ultrasonic dispersing machine.

The heating temperature in dispersing is preferably a temperature equal to or higher than the melting point of the releasing agent and 80°C or higher, more preferably 85°C or higher, even more preferably 90°C or higher, and is preferably lower than a temperature higher by 10°C than the softening point of the resin contained in the resin particles S and 100°C or lower, more preferably 98°C or lower, even more preferably 95°C or lower.

The amount of the resin particles S is preferably 5 parts by mass or more, more preferably 10 parts by mass or more, even more preferably 20 parts by mass or more, and is preferably 100 parts by mass or less, more preferably 70 parts by mass or less, even more preferably 50 parts by mass or less, relative to 100 parts by mass of the releasing agent.

The volume median particle diameter $D_{50}$ of the releasing agent particles is preferably 0.05 μm or more, more preferably 0.1 μm or more, even more preferably 0.2 μm or more, and is preferably 1 μm or less, more preferably 0.8 μm or less, even more preferably 0.6 μm or less from the viewpoint of obtaining uniform aggregated particles 1 by aggregation.

The CV value of the releasing agent particles is preferably 10% or more, more preferably 15% or more, and is preferably 40% or less, more preferably 35% or less, even more preferably 30% or less.

The volume median particle diameter $D_{50}$ and the CV value of the releasing agent particles are measured according to the methods described in the section of Examples.

The aggregated particles 1 may further contain additives such as a charge control agent, a magnetic powder, a fluidity enhancer, a conductivity control agent, a reinforcing filler such as a fibrous substance, an antioxidant, an anti-aging agent, and a cleaning property enhancer.

[Surfactant]

In the step of aggregating the resin particles, mixing the respective particle dispersions to prepare a mixed dispersion can be carried out in the presence of a surfactant from the viewpoint of improving the dispersion stability of the resin particles, the releasing agent particles, the colorant particles, and the like. Examples of the surfactant include anionic surfactants such as an alkylbenzenesulfonate salt and an alkylether sulfonate salt; and nonionic surfactants such as a polyoxyethylene alkyl ether and a polyoxyethylene alkenyl ether.

In the case of using the surfactant, the total amount thereof to be used is preferably 0.1 parts by mass or more, more preferably 0.3 parts by mass or more, even more preferably 0.5 parts by mass or more, and is preferably 10 parts by mass or less, more preferably 5 parts by mass or less, even more preferably 3 parts by mass or less, relative to 100 parts by mass of the total resin particles containing the resin (B).

[Aggregating Agent]

Preferably, an aggregating agent is added in the step of aggregating the resin particles from the viewpoint of effectively carrying out aggregation.

Examples of the aggregating agent include organic aggregating agents such as a cationic surfactant in the form of a quaternary salt and polyethyleneimine; and inorganic aggregating agents. Examples of the inorganic aggregating agent include inorganic metal salts such as sodium sulfate, sodium nitrate, sodium chloride, calcium chloride, and calcium nitrate; inorganic ammonium salts such as ammonium sulfate, ammonium chloride, and ammonium nitrate; and divalent or higher metal complexes.

From the viewpoint of obtaining uniform aggregated particles 1 having improved aggregating property, monovalent or higher and pentavalent or lower inorganic aggregating agents are preferred, monovalent or higher and divalent or lower inorganic metal salts and inorganic ammonium salts are more preferred, inorganic ammonium salts are even more preferred, and ammonium sulfate is further more preferred.

For example, the aggregating agent in an amount of 5 parts by mass or more and 50 parts by mass or less relative to 100 parts by mass of the resins in the resin particles is added to a mixed dispersion containing the resin particles, the releasing agent particles, and the colorant particles at 0°C or higher and 40°C or lower so that the resin particles, the releasing agent particles, and the colorant particles are aggregated in an aqueous medium using the aggregating agent, to give the aggregated particles 1. Further preferably, the temperature of the dispersion is increased after addition of the aggregating agent thereto, from the viewpoint of accelerating aggregation.

As a method of stopping aggregation, there are mentioned a method of cooling the dispersion, a method of adding an aggregation stopping agent, a method of diluting the dispersion, and the like. From the viewpoint of surely preventing any unnecessary aggregation, a method of adding an aggregation stopping agent to stop aggregation is preferred.

[Aggregation Stopping Agent]

The aggregation stopping agent is preferably a surfactant, more preferably an anionic surfactant. Examples of the anionic surfactant include alkylbenzenesulfonate salts, alkyl sulfate salts, alkyl ether sulfate salts, and polyoxyalkylene alkyl ether sulfate salts. One alone or two or more kinds of the anionic surfactants may be used. The aggregation stopping agent may be added in the form of an aqueous solution thereof.

Relative to 100 parts by mass of the resins in the resin particles, the amount of the aggregation stopping agent to be added is preferably 1 part by mass or more, more preferably 3 parts by mass or more from the viewpoint of surely preventing unnecessary aggregation, and is preferably 15 parts by mass or less, more preferably 12 parts by mass or less, even more preferably 10 parts by mass or less from the viewpoint of reducing the agent from remaining in toner.

The volume median particle diameter $D_{50}$ of the aggregated particles 1 is preferably 2 μm or more, more preferably 3 μm or more, even more preferably 4 μm or more, and is preferably 10 μm or less, more preferably 8 μm or less, even more preferably 7 μm or less.

In the present invention, after the step of aggregating the resin particles and before the step of coalescing the particles, the method may include a step of attaching shell resin particles containing an amorphous resin (preferably an amorphous polyester-based resin) to the resultant aggregated particles 1 to obtain aggregated particles 2, a step of aggregating the shell resin particles. According to the step of aggregating the shell resin particles, toner particles having a core-shell structure can be obtained.

Herein, as the amorphous resin used for the shell resin particles, the resin (A) and the resin (B) are exemplified. The shell resin particles are obtained by the same method as the method for producing the resin particles containing the amorphous resin and/or the crystalline resin.
In the case where the method for producing a toner includes a step of aggregating the shell resin particles, aggregation is preferably stopped at the time when the aggregated particles 2 have grown to have a particle diameter suitable as toner particles in this step. A method for stopping aggregation by adding the above-mentioned aggregation stopping agent is preferred.
The ratio of the mass of the shell resin particles to the mass of the aggregated particles 1 (shell resin particles/aggregated particles 1) is preferably 1/99 or more, more preferably 3/97 or more, even more preferably 5/95 or more, and is preferably 25/75 or less, more preferably 20/80 or less, even more preferably 15/85 or less from the viewpoint of the low-temperature fusing property of the toner.

[Coalescing Step]

In the coalescing step, for example, the aggregated particles 1 or the aggregated particles 2 are coalesced in an aqueous medium.
By coalescing, individual particles of the aggregated particles 1 or the aggregated particles 2 are coalesced to give coalesced particles.
In the coalescing step, from the viewpoint of improving the coalescing property of the aggregated particles 1 or the aggregated particles 2 and from the viewpoint of achieving both the low-temperature fusing property and the heat-resistant storage stability of the toner, the aggregated particles are held at a temperature equal to or higher than the glass transition temperature of a resin having the highest glass transition temperature among the resins in the aggregated particles.
From the viewpoint of improving the coalescing property of the aggregated particles and from the viewpoint of improving the productivity of the toner, the holding temperature in coalescing the aggregated particles is preferably a temperature equal to or higher than the glass transition temperature of the resin plus 5°C, more preferably plus 10°C, even more preferably plus 15°C, and is preferably a temperature equal to or lower than the glass transition temperature of the resin plus 40°C, more preferably plus 38°C, even more preferably plus 35°C.
The time in holding at a temperature equal to or higher than the glass transition temperature of the resin is preferably 1 minute or more, more preferably 10 minutes or more, even more preferably 30 minutes or more, and is preferably 240 minutes or less, more preferably 180 minutes or less, even more preferably 120 minutes or less, further more preferably 90 minutes or less from the viewpoint of achieving both the low-temperature fusing property and the heat-resistant storage stability of the toner.
Preferably, the aggregated particles are held at the above-mentioned temperature until they have a desired degree of circularity.
The volume median particle diameter $D_{50}$ of the coalesced particles formed by coalescing is preferably 2 μm or more, more preferably 3 μm or more, even more preferably 4 μm or more, and is preferably 10 μm or less, more preferably 8 μm or less, even more preferably 7 μm or less.
The degree of circularity of the coalesced particles formed by coalescing is preferably 0.955 or more, more preferably 0.960 or more, and is preferably 0.990 or less, more preferably 0.985 or less, even more preferably 0.980 or less.
Preferably, coalescing is finished when the degree of circularity thereof has reached a preferable one.
The degree of circularity is measured according to the method described in the section of Examples.

<Post-Treatment Step>

After the coalescing step, a post-treatment step may be carried out, and by isolating the coalesced particles, toner particles can be obtained. Since the coalesced particles formed in the coalescing step exist in an aqueous medium, solid-liquid separation is preferably carried out first. For solid-liquid separation, a suction filtration method or the like is preferably used.
After solid-liquid separation, the particles are preferably washed. At that time, preferably, the added surfactant is also removed, and therefore for the washing, an aqueous medium is preferably used at a temperature equal to or lower than the clouding point of the surfactant. Preferably, washing is repeated plural times.
Next, drying is preferably carried out. Examples of the drying method include a vacuum low-temperature drying method, an oscillation-type fluidized drying method, a spray drying method, a freeze drying method, and a flush jet method.

[Toner Particles]

The volume median particle diameter $D_{50}$ of the toner particles is preferably 2 μm or more, more preferably 3

μm or more, even more preferably 4 μm or more, and is preferably 10 μm or less, more preferably 8 μm or less, even more preferably 7 μm or less from the viewpoint of obtaining a toner having excellent low-temperature fusing property, charge property, and durability and from the viewpoint of further improving the cleaning property of the toner.

The degree of circularity of the toner particles is preferably 0.955 or more, more preferably 0.960 or more from the viewpoint of obtaining high-quality images, and is preferably 0.990 or less, more preferably 0.985 or less, even more preferably 0.980 or less from the viewpoint of cleaning property.

The CV value of the toner particles is preferably 10% or more, more preferably 15% or more, even more preferably 20% or more from the viewpoint of improving the productivity of the toner, and is preferably 40% or less, more preferably 35% or less, even more preferably 30% or less from the viewpoint of obtaining high-quality images.

The volume median particle diameter $D_{50}$ of the toner particles is measured according to the method described in the section of Examples.

[Electrostatic Image Development Toner]

The electrostatic image development toner of the present invention contains toner particles.

The toner particles may be used as a toner as they are, but preferably, those further processed by adding an external additive such as a fluidity enhancer to the surfaces of the toner particles are used as a toner.

[External Additive]

Examples of the external additive include fine particles of an inorganic material such as hydrophobic silica, titanium oxide, alumina, cerium oxide, or carbon black, and polymer fine particles of polycarbonate, polymethyl methacrylate or silicone resin. Among these, hydrophobic silica is preferred. One kind of the external additive may be used alone, or two or more kinds thereof may be used. Two or more kinds of hydrophobic silicas having different particle diameters may be used.

In the case where the toner particles are subjected to a surface treatment with the external additive, the amount of the external additive to be added is preferably 1 part by mass or more, more preferably 2 parts by mass or more, even more preferably 3 parts by mass or more, and is preferably 5 parts by mass or less, more preferably 4.5 parts by mass or less, even more preferably 4 parts by mass or less, relative to 100 parts by mass of the toner particles.

The toner is used for electrostatic image development in electrophotographic printing. The toner can be used, for example, as a one-component developing agent, or as a two-component developing agent as mixed with a carrier.

For the above-mentioned embodiment, the present invention further discloses the following embodiments.

<1> An electrostatic image development toner containing an amorphous resin and a crystalline resin as binder resins, wherein the amorphous resin contains an amorphous polyester resin (A) that is a polycondensate of an alcohol component (a) containing 80 mol% or more of an aliphatic diol (a1) and a carboxylic acid component (b), the alcohol component (a) contains 60 mol% or more of an aliphatic diol (a2) having 5 or 6 carbon atoms and having an alkyl group on a side chain, and the crystalline resin contains a crystalline polyester resin (C) that is a polycondensate of an aliphatic alcohol (c) and a carboxylic acid component (d).

<2> The electrostatic image development toner according to <1>, wherein the aliphatic diol (a1) is an aliphatic diol having 2 or more and 16 or less carbon atoms, and preferably contains the aliphatic diol (a2).

<3> The electrostatic image development toner according to <1> or <2>, wherein the aliphatic diol (a2) contains at least one selected from neopentyl glycol and 3-methyl-1,5-pentanediol.

<4> The electrostatic image development toner according to any one of <1> to <3>, wherein the content of the aliphatic diol (a1) in the alcohol component (a) is 80 mol% or more, preferably 90 mol% or more, more preferably 95 mol% or more, and is 100 mol% or less, preferably 100 mol%.

<5> The electrostatic image development toner according to any one of <1> to <4>, wherein the content of the aliphatic diol (a2) in the alcohol component (a) is 60 mol% or more, preferably 80 mol% or more, more preferably 90 mol% or more, and is 100 mol% or less, preferably 100 mol%.

<6> The electrostatic image development toner according to any one of <1> to <5>, wherein the carboxylic acid component (b) contains at least one selected from terephthalic acid and isophthalic acid.

<7> The electrostatic image development toner according to any one of <1> to <6>, wherein the content of an aromatic dicarboxylic acid compound in the carboxylic acid component (b) is preferably 60 mol% or more, more preferably 70 mol% or more, even more preferably 80 mol% or more, and is preferably 100 mol% or less, more preferably 100 mol%.

<8> The electrostatic image development toner according to any one of <1> to <7>, wherein the softening point of the amorphous polyester resin (A) is preferably 70°C or higher, more preferably 80°C or higher, even more preferably 90°C or higher, and is preferably 130°C or lower, more preferably 120°C or lower, even more preferably 110°C or

lower.

<9> The electrostatic image development toner according to any one of <1> to <8>, wherein the glass transition temperature of the amorphous polyester resin (A) is preferably 30°C or higher, more preferably 35°C or higher, even more preferably 40°C or higher, and is preferably 80°C or lower, more preferably 70°C or lower, even more preferably 65°C or lower.

<10> The electrostatic image development toner according to any one of <1> to <9>, wherein the acid value of the amorphous polyester resin (A) is preferably 5 mgKOH/g or more, more preferably 8 mgKOH/g or more, even more preferably 10 mgKOH/g or more, and is preferably 40 mgKOH/g or less, more preferably 30 mgKOH/g or less, even more preferably 25 mgKOH/g or less.

<11> The electrostatic image development toner according to any one of <1> to <10>, wherein the amorphous resin contains an amorphous polyester-based resin (B) except the amorphous polyester resin (A).

<12> The electrostatic image development toner according to <11>, wherein the alcohol component of the amorphous polyester resin (B) contains an aliphatic diol, and the content of the aliphatic diol in the alcohol component is preferably 80 mol% or more, more preferably 90 mol% or more, even more preferably 95 mol% or more, and is 100 mol% or less, more preferably 100 mol%.

<13> The electrostatic image development toner according to <11> or <12>, wherein the carboxylic acid component of the amorphous polyester resin (B) contains at least one selected from terephthalic acid, isophthalic acid, and fumaric acid.

<14> The electrostatic image development toner according to any one of <11> to <13>, wherein the softening point of the amorphous polyester resin (B) is preferably 70°C or higher, more preferably 90°C or higher, even more preferably 95°C or higher, and is preferably 150°C or lower, more preferably 140°C or lower, even more preferably 125°C or lower.

<15> The electrostatic image development toner according to any one of <11> to <14>, wherein the glass transition temperature of the amorphous polyester resin (B) is preferably 30°C or higher, more preferably 35°C or higher, even more preferably 40°C or higher, and is preferably 80°C or lower, more preferably 70°C or lower, even more preferably 65°C or lower.

<16> The electrostatic image development toner according to any one of <11> to <15>, wherein the acid value of the amorphous polyester resin (B) is preferably 5 mgKOH/g or more, more preferably 10 mgKOH/g or more, even more preferably 15 mgKOH/g or more, and is preferably 40 mgKOH/g or less, more preferably 35 mgKOH/g or less, even more preferably 30 mgKOH/g or less.

<17> The electrostatic image development toner according to any one of <1> to <16>, wherein the aliphatic alcohol (c) contains a linear aliphatic diol.

<18> The electrostatic image development toner according to <17>, wherein the number of carbon atoms of the linear aliphatic diol is preferably 2 or more, more preferably 4 or more, even more preferably 6 or more, and is preferably 16 or less, more preferably 14 or less, even more preferably 12 or less.

<19> The electrostatic image development toner according to <17> or <18>, wherein the content of the linear aliphatic diol in the alcohol component (c) is preferably 80 mol% or more, more preferably 85 mol% or more, even more preferably 90 mol% or more, further more preferably 95 mol% or more, and is 100 mol% or less, further more preferably 100 mol%.

<20> The electrostatic image development toner according to any one of <1> to <19>, wherein the carboxylic acid component (d) contains an aliphatic dicarboxylic acid.

<21> The electrostatic image development toner according to <20>, wherein the number of carbon atoms of the aliphatic dicarboxylic acid is preferably 4 or more, more preferably 8 or more, even more preferably 10 or more, and is preferably 14 or less, more preferably 12 or less.

<22> The electrostatic image development toner according to <20> or <21 >, wherein the aliphatic dicarboxylic acid contains at least one selected from sebacic acid, dodecanedioic acid, and fumaric acid.

<23> The electrostatic image development toner according to any one of <20> to <22>, wherein the amount of the aliphatic dicarboxylic acid in the carboxylic acid component is preferably 80 mol% or more, more preferably 85 mol% or more, and is preferably 100 mol% or less.

<24> The electrostatic image development toner according to any one of <1> to <23>, wherein the softening point of the crystalline polyester resin (C) is preferably 60°C or higher, more preferably 65°C or higher, even more preferably 70°C or higher, and is preferably 150°C or lower, more preferably 120°C or lower, even more preferably 110°C or lower.

<25> The electrostatic image development toner according to any one of <1> to <24>, wherein the melting point of the crystalline polyester resin (C) is preferably 50°C or higher, more preferably 55°C or higher, even more preferably 60°C or higher, and is preferably 140°C or lower, more preferably 110°C or lower, even more preferably 100°C or lower.

<26> The electrostatic image development toner according to any one of <1> to <25>, wherein the acid value of

the crystalline polyester resin (C) is preferably 5 mgKOH/g or more, more preferably 8 mgKOH/g or more, and is preferably 25 mgKOH/g or less, more preferably 20 mgKOH/g or less.

<27> The electrostatic image development toner according to any one of <1> to <26>, wherein the ratio by mass of the crystalline polyester resin (C) to the amorphous polyester resin (A) [crystalline polyester resin (C)/amorphous polyester resin (A)] is preferably 5/95 or more, more preferably 10/90 or more, even more preferably 15/85 or more, and is preferably 40/60 or less, more preferably 30/70 or less, even more preferably 25/75 or less.

<28> The electrostatic image development toner according to any one of <1> to <27>, wherein in addition to the amorphous resin and the crystalline resin, at least one of a colorant or a releasing agent, preferably both the colorant and the releasing agent may be contained in toner particles.

<29> The electrostatic image development toner according to any one of <1> to <28>, wherein the electrostatic image development toner has a core-shell structure.

<30> The electrostatic image development toner according to any one of <1> to <29>, wherein the content of the amorphous polyester resin (A) in the amorphous resin contained in toner particles having no core-shell structure or if the toner particles have a core-shell structure, in the core portion, is preferably 90 mass% or more, more preferably 92 mass% or more, even more preferably 95 mass% or more, and is preferably 100 mass% or less, more preferably 100 mass%.

<31> A method for producing an electrostatic image development toner including a step of aggregating resin particles into which an amorphous resin and a crystalline resin are incorporated together or separately, and a coalescing step, wherein the amorphous resin contains an amorphous polyester resin (A) that is a polycondensate of an alcohol component (a) containing 80 mol% or more of an aliphatic diol (a1) and a carboxylic acid component (b), the alcohol component (a) contains 60 mol% or more of an aliphatic diol (a2) having 5 or 6 carbon atoms and having an alkyl group on a side chain, and the crystalline resin contains a crystalline polyester resin (C) that is a polycondensate of an aliphatic alcohol (c) and a carboxylic acid component (d).

<32> The method for producing an electrostatic image development toner according to <31>, further including, after the step of aggregating the resin particles and before the coalescing step, a step of attaching shell resin particles containing an amorphous resin (preferably an amorphous polyester-based resin) to the resultant aggregated particles 1 to obtain aggregated particles 2, a step of aggregating the shell resin particles.

<33> The method for producing an electrostatic image development toner according to <32>, wherein the amorphous resin contained in the shell resin particles contains the amorphous polyester resin (A) and an amorphous polyester resin (B).

<34> The method for producing an electrostatic image development toner according to <31> or <32>, wherein the ratio of the mass of the shell resin particles to the mass of the aggregated particles 1 (shell resin particles/aggregated particles 1) is preferably 1/99 or more, more preferably 3/97 or more, even more preferably 5/95 or more, and is preferably 25/75 or less, more preferably 20/80 or less, even more preferably 15/85 or less.

## Examples

Hereinunder the present invention is described specifically with reference to Examples, but the present invention is not whatsoever restricted by these Examples. Property values were measured and evaluated according to the methods mentioned below.

In an expression of "alkylene oxide (X)" or the like, the parenthesized numerical value X means an average molar number of addition of an alkylene oxide.

### [Measurement methods]

Property values of a polyester resin, resin particles, a toner, and the like were measured and evaluated according to the following methods.

[Softening point, crystallinity index, melting point, and glass transition temperature of resin]

#### (1) Softening point

Using a flow tester "CFT-500D" (from Shimadzu Corporation), 1 g of a sample was extruded through a nozzle having a die pore diameter of 1 mm and a length of 1 mm while heating the sample at a heating rate of 6°C/min and applying a load of 1.96 MPa thereto by a plunger. The softening point was determined as the temperature at which a half amount of the sample has flowed out when plotting a downward movement of the plunger of the flow tester relative to the temperature.

(2) Crystallinity index

Using a differential scanning calorimeter "Q100" (from TA Instruments Japan Inc.), 0.02 g of a sample was weighed in an aluminum pan and cooled to 0°C at a cooling rate of 10°C/min. Next, the sample was kept as such for 1 minute, and thereafter heated to 180°C at a heating rate of 1 0°C/min to measure the quantity of heat thereof. Among the detected endothermic peaks, a peak temperature at which the peak area is the largest is referred to as a maximum peak temperature (1), and according to (softening point (°C))/(endothermic maximum peak temperature (1) (°C)), the crystallinity index was determined.

(3) Melting point and glass transition temperature

Using a differential scanning calorimeter "Q100" (from TA Instruments Japan Inc.), 0.02 g of a sample was weighed in an aluminum pan, heated to 200°C, and then cooled from the temperature to 0°C at a cooling rate of 10°C/min. Next, the sample was heated at a heating rate of 10°C/min to measure the quantity of heat thereof. Among the detected endothermic peaks, a peak temperature at which the peak area is the largest is referred to as an endothermic maximum peak temperature (2). In the case of a crystalline resin, the peak temperature is referred to as the melting point thereof.
In the case of an amorphous resin that gave a peak, the peak temperature is referred to as the glass transition temperature thereof, but in the case where the amorphous resin did not give a peak but showed steps, a temperature at the intersection point between the tangent line that shows a maximum inclination of the curve of the stepped part and the extension line of the base line on the low temperature side of the steps is referred to as a glass transition temperature of the resin.

[Acid value of resin]

The acid value of resin was measured according to a neutralization titration method described in JIS K 0070:1992. A measurement solvent was a mixed solvent of acetone and toluene (acetone:toluene=1:1 (by volume)).

[Melting point of releasing agent]

Using a differential scanning calorimeter "Q100" (from TA Instruments Japan Inc.), 0.02 g of a sample was weighed in an aluminum pan, heated to 200°C, and then cooled from 200°C to 0°C at a cooling rate of 10°C/min. Next, the sample was heated at a heating rate of 10°C/min to measure the quantity of heat thereof, and the endothermic maximum peak temperature is referred to as the melting point of the sample.

[Volume median particle diameter $D_{50}$ and CV value of resin particles, colorant particles, and releasing agent particles]

(1) Measuring apparatus: Laser diffraction-type particle sizer "LA-920" (from HORIBA, Ltd.)
(2) Measuring conditions: In a cell for the measurement, a sample dispersion was put, distilled water was added thereto, and at a concentration at which the absorbance could fall within an appropriate range, the volume median particle diameter $D_{50}$ and the volume-average particle diameter Dv of the sample were measured. The CV value was calculated according to the following expression.

CV value (%) = (standard deviation of particle diameter distribution/volume- average particle diameter Dv) ×100

[Solid concentration in resin particle dispersion, colorant particle dispersion, and releasing agent particle dispersion]

Using an infrared moisture meter "FD-230" (from Kett Electric Laboratory Co. Ltd.), 5 g of a sample to be analyzed was dried at a drying temperature of 150°C under a measuring mode 96 (monitoring time: 2.5 minutes, water content variation range: 0.05%), and then subjected to measurement of a water content (mass%) of the sample. The solid concentration was calculated according to the following expression.

$$\text{Solid concentration (mass\%)} = 100 - \text{water content (mass\%)}$$

[Volume median particle diameter $D_{50}$ of aggregated particles]

The volume median particle diameter $D_{50}$ of aggregated particles was measured as follows.

Measuring apparatus: "Coulter Multisizer (trademark) III" (from Beckman Coulter, Inc.)
Aperture diameter: 50 μm
Analyzing software: "Multisizer (trademark) III version 3.51" (from Beckman Coulter, Inc.)
Electrolyte solution: "Isotone (trademark) II" (from Beckman Coulter, Inc.)
Measuring conditions: A sample dispersion was added to 100 mL of the above-mentioned electrolyte solution to control the concentration thereof so as to complete the measurement for particle diameters of 30,000 particles within 20 seconds, then the particle diameters of the 30,000 particles in the dispersion were measured, and the volume median particle diameter $D_{50}$ of the particles was determined from the particle diameter distribution thereof.

[Degree of circularity of coalesced particles]

The degree of circularity of coalesced particles was measured under the following conditions.

Measuring apparatus: Flow-type particle image analyzer "FPIA-3000" (from SYSMEX CORPORATION)
Preparation of dispersion: A dispersion of coalesced particles was prepared by diluting the particles with deionized water to have a solid concentration of 0.001 to 0.05 mass%.
Measuring mode: HPF measuring mode

[Volume median particle diameter $D_{50}$ and CV value of toner particles]

The volume median particle diameter $D_{50}$ of toner particles was measured as follows.
The measuring apparatus, the aperture diameter, the analyzing software, and the electrolyte solution were the same as those used for measurement of the volume median particle diameter $D_{50}$ of aggregated particles mentioned above.
Dispersion: Polyoxyethylene lauryl ether "Emulgen (trademark) 109P" (from Kao Corporation, HLB (hydrophile-lipophile balance) = 13.6) was dissolved in the above-mentioned electrolyte solution to prepare a dispersion having a concentration of 5 mass%.
Dispersing conditions: 10 mg of a sample for measurement of dried toner particles was added to 5 mL of the above-mentioned dispersion, and dispersed for 1 minute using an ultrasonic disperser, and thereafter 25 mL of the above-mentioned electrolyte solution was added thereto and further dispersed for 1 minute with the ultrasonic disperser to prepare a sample dispersion.
Measuring conditions: The sample dispersion was added to 100 mL of the above-mentioned electrolyte solution to control the concentration thereof so as to complete the measurement for particle diameters of 30,000 particles within 20 seconds, then the particle diameters of the 30,000 particles were measured, and the volume median particle diameter $D_{50}$ and the volume-average particle diameter Dv of the particles were determined from the particle diameter distribution thereof.
The CV value (%) was calculated according to the following expression.

$$\text{CV value (\%)} = (\text{standard deviation of particle diameter distribution/volume- average particle diameter Dv}) \times 100$$

[Weight-average molecular weight of addition polymer]

An eluent solution was prepared by dissolving phosphoric acid and lithium bromide in N,N-dimethylformamide to have a concentration of 60 mmol/L and 50 mmol/L, respectively, therein. Using the eluent solution, a sample was analyzed through gel permeation chromatography [GPC apparatus "HLC-8320GPC" (from Tosoh Corporation), column "TSKgel Super AWM-H", "TSKgel Super AW3000", and "TSKgel guard column Super AW-H" (from Tosoh Corporation), flow rate: 0.5 mL/min], based on a monodispersed polystyrene kit having a known molecular weight as a standard substance [PSt Quick B (F-550, F-80, F-10, F-1, A-1000), PSt Quick C (F-288, F-40, F-4, A-5000, A-500), from Tosoh Corporation].

[Production of resin]

[Production of amorphous polyester resin (A)]

Production Example A1 (production of resin A-1)

As shown in Table 1, raw material monomers for polyester resin other than isophthalic acid and an esterification catalyst were put into a 10-L four-necked flask equipped with a nitrogen inlet tube, a dewatering conduit equipped with a distilling column through which hot water at 98°C was passed, a stirrer, and a thermocouple. In a nitrogen atmosphere, a reaction system was kept at 180°C for 1 hour, heated from 180°C to 230°C at a rate of 10°C/h, and then kept at 230°C for 5 hours, and polycondensation was carried out. Subsequently, the reaction system was cooled to 180°C, isophthalic acid was added to the reaction system, the mixture was heated from 180°C to 210°C at a rate of 10°C/h, and was subjected to a reaction at 210°C for 1 hour, and the reaction was carried out at 210°C and 10 kPa to a softening point shown in Table 1, to give a resin A-1. The property values are shown in Table 1.

Production Examples A2 to A4 and Comparative Production Example A1 (production of resins A-2 to A-4 and resin A'-1)

Resins A-2, A-3, A-4, and A'-1 were produced in the same manner as in Production Example A1 except that the raw material monomers for polyester resin were changed as shown in Table 1. The property values are shown in Table 1.

Comparative Production Example A2 (production of resin A'-2)

As shown in Table 1, raw material monomers for polyester resin other than isophthalic acid, an esterification catalyst, and an esterification promoter were put into a 10-L four-necked flask equipped with a nitrogen inlet tube, a dewatering conduit equipped with a distilling column through which hot water at 98°C was passed, a stirrer, and a thermocouple. In a nitrogen atmosphere, a reaction system was kept at 205°C for 1 hour, heated from 205°C to 235°C at a rate of 10°C/h, and then kept at 235°C for 3 hours, and polycondensation was carried out. Subsequently, the reaction system was cooled to 185°C, isophthalic acid was added to the reaction system, the mixture was heated from 185°C to 235°C at a rate of 10°C/h, and was subjected to a reaction at 235°C for 5 hours, and the reaction was carried out at 235°C and 10 kPa to a softening point shown in Table 1, to give a resin A'-2. The property values are shown in Table 1.

Table 1

| Production Example | | | Production Example A1 | | Production Example A2 | | Production Example A3 | | Production Example A4 | | Comparative Production Example A1 | | Comparative Production Example A2 | |
|---|---|---|---|---|---|---|---|---|---|---|---|---|---|---|
| Resin | | | A-1 | | A-2 | | A-3 | | A-4 | | A'-1 | | A'-2 | |
| Raw material monomer for polyester resin | | | Charged amount (g) | Part by mole *1 | Charged amount (g) | Part by mole *1 | Charged amount (g) | Part by mole *1 | Charged amount (g) | Part by mole *1 | Charged amount (g) | Part by mole *1 | Charged amount (g) | Part by mole *1 |
| | Alcohol component | Neopentyl glycol | 3805 | 100 | 2448 | 60 | - | - | - | - | 1688 | 40 | 2087 | 70 |
| | | 3-Methyl-1,5-pentanediol | - | - | - | - | 2601 | 60 | 3016 | 100 | - | - | - | - |
| | | 1,2-Propanediol | - | - | - | - | 1117 | 40 | - | - | - | - | - | - |
| | | Ethylene glycol | - | - | 973 | 40 | - | - | - | - | 1509 | 60 | - | - |
| | | BPA-PO *2 | - | - | - | - | - | - | - | - | - | - | 3011 | 30 |
| | Carboxylic acid component | Terephthalic acid | 4937 | 70 | 4885 | 75 | 5794 | 95 | 5271 | 80 | 5052 | 75 | 1285 | 27 |
| | | Isophthalic acid | 1834 | 26 | 1694 | 26 | 488 | 8 | 1713 | 26 | 1751 | 26 | 3617 | 76 |
| Esterification catalyst | Tin(II) di(2-ethylhexanoate) (g) | | 50 | | 50 | | 50 | | 50 | | 50 | | 50 | |
| Esterification promoter | Gallic acid (g) | | - | | - | | - | | - | | - | | 5 | |

(continued)

| Production Example | | Production Example A1 | | Production Example A2 | | Production Example A3 | | Production Example A4 | | Comparative Production Example A1 | | Comparative Production Example A2 | |
|---|---|---|---|---|---|---|---|---|---|---|---|---|---|
| Resin | | A-1 | | A-2 | | A-3 | | A-4 | | A'-1 | | A'-2 | |
| Properties | | Charged amount (g) | Part by mole *1 | Charged amount (g) | Part by mole *1 | Charged amount (g) | Part by mole *1 | Charged amount (g) | Part by mole *1 | Charged amount (g) | Part by mole *1 | Charged amount (g) | Part by mole *1 |
| | Softening point (°C) | 103 | | 101 | | 100 | | 107 | | 100 | | 102 | |
| | Glass transition temperature (°C) | 56 | | 55 | | 42 | | 61 | | 55 | | 58 | |
| | Crystallinity index | 1.7 | | 1.7 | | 2.2 | | 1.7 | | 1.7 | | 1.7 | |
| | Acid value (mgKOH/g) | 23 | | 19 | | 13 | | 20 | | 17 | | 25 | |

*1: This means part by mole of each monomer based on 100 parts by mole of the alcohol component of the raw material monomer for polyester resin.
*2: BPA-PO means a propylene oxide (2.2) adduct of bisphenol A.

[Production of amorphous polyester-based resin (B)]

Production Example B1 (production of resin B-1)

As shown in Table 2, raw material monomers for polyester resin other than fumaric acid and an esterification catalyst were put into a 10-L four-necked flask equipped with a nitrogen inlet tube, a dewatering conduit equipped with a distilling column through which hot water at 98°C was passed, a stirrer, and a thermocouple. In a nitrogen atmosphere, a reaction system was kept at 180°C for 1 hour, heated from 180°C to 230°C at a rate of 10°C/h, and then kept at 230°C for 5 hours, and polycondensation was carried out. Subsequently, the reaction system was cooled to 180°C, fumaric acid and 2 g of a radical polymerization inhibitor (4-tert-butylcatechol) were added to the reaction system, the mixture was heated from 180°C to 230°C at a rate of 10°C/h, and was subjected to a reaction at 230°C for 1 hour, and the reaction was carried out at 230°C and 10 kPa to a softening point shown in Table 2, to give a resin B-1. The property values are shown in Table 2.

Table 2

| Production Example | | | Production Example B1 | |
|---|---|---|---|---|
| Resin B-1 | | | | |
| | | | Charged amount (g) | Part by mole *1 |
| Raw material monomer for polyester resin | Alcohol component | 1,2-Propanediol | 3312 | 100 |
| | Carboxylic acid component | Terephthalic acid | 5425 | 70 |
| | | Fumaric acid | 1264 | 25 |
| Esterification catalyst | Tin(II) di(2-ethylhexanoate) (g) | | 50 | |
| Radical polymerization inhibitor | 4-tert-Butylcatechol (g) | | 2 | |
| Properties | Softening point (°C) | | 107 | |
| | Glass transition temperature (°C) | | 62 | |
| | Crystallinity index | | 1.6 | |
| | Acid value (mgKOH/g) | | 23 | |
| * 1: This means part by mole of each monomer constituting the raw material monomer based on 100 parts by mole of the alcohol component of the raw material monomer for polyester resin. | | | | |

[Production of Crystalline polyester-based resin (C)]

Production Example C1 (production of resin C-1)

As shown in Table 3, raw material monomers for polyester resin were put into a 10-L four-necked flask equipped with a nitrogen inlet tube, a dewatering conduit, a stirrer, and a thermocouple. The inside of the flask was purged with nitrogen, a reaction system was heated to 135°C with stirring, kept at 135°C for 3 hours, and then heated from 135°C to 200°C over 10 hours. After that, 15 g of tin(II) di(2-ethylhexanoate) was added to the reaction system, the reaction system was kept at 200°C for 1 hour, the pressure inside the flask was lowered, and kept under a reduced pressure of 8 kPa for 1 hour, to give a resin C-1 as a crystalline polyester resin. The property values are shown in Table 3.

Production Examples C2 to C4 (production of resins C-2 to C-4)

Resins C-2 to C-4 were produced in the same manner as in Production Example C1 except that the raw material monomers for polyester resin were changed as shown in Table 3. The property values are shown in Table 3.

Table 3

| Production Example | | | Production Example C1 | | Production Example C2 | | Production Example C3 | | Production Example C4 | |
|---|---|---|---|---|---|---|---|---|---|---|
| Resin | | | C-1 | | C-2 | | C-3 | | C-4 | |
| Raw material monomer for polyester resin | | | Charged amount (g) | Part by mole *1 | Charged amount (g) | Part by mole *1 | Charged amount (g) | Part by mole *1 | Charged amount (g) | Part by mole *1 |
| | Alcohol component | 1,6-Hexanediol | 2494 | 100 | - | - | - | - | - | - |
| | | 1,10-Decanediol | - | - | 3416 | 100 | - | - | - | - |
| | | 1,12-Dodecanediol | - | - | - | - | 4713 | 100 | - | - |
| | | Ethylene glycol | - | - | - | - | - | - | 1708 | 100 |
| | Carboxylic acid component | Sebacic acid | - | - | 4084 | 103 | - | - | 5009 | 90 |
| | | Dodecanedioic acid | 5006 | 103 | - | - | - | - | - | - |
| | | Fumaric acid | - | - | - | - | 2784 | 103 | - | - |
| | | Stearic acid | - | - | - | - | - | - | 783 | 10 |
| Esterification catalyst | Tin(II) di(2-ethylhexanoate) (g) | | 15 | | 15 | | 15 | | 15 | |
| Properties | Softening point (°C) | | 80 | | 88 | | 93 | | 80 | |
| | Melting point (°C) | | 71 | | 77 | | 91 | | 77 | |
| | Crystallinity index | | 1.1 | | 1.1 | | 1.1 | | 1 | |
| | Acid value (mgKOH/g) | | 18 | | 17 | | 15 | | 11 | |

*1: This means part by mole of each monomer based on 100 parts by mole of the alcohol component of the raw material monomer for polyester resin.

[Production of resin particle dispersion]

Production Example X1 (production of resin particle dispersion X-1)

160 g of the resin A-1, 40 g of the resin C-1, and 200 g of methyl ethyl ketone were put into a 3-L reactor equipped with a stirrer, a reflux condenser, a dropping funnel, a thermometer, and a nitrogen inlet tube, and dissolved at 73°C over 2 hours. An aqueous solution of 5 mass% sodium hydroxide was added to the resultant solution so that the degree of neutralization could be 60 mol% relative to the acid value of the resin, and stirred for 30 minutes.

Next, while the mixture was kept at 73°C, 700 g of deionized water was added over 50 minutes with stirring at 200 r/min for phase inversion emulsification. While the resultant solution was kept at 73°C, methyl ethyl ketone was evaporated under reduced pressure to give a dispersion. Subsequently, with stirring, the dispersion was cooled to 30°C, and then deionized water was added so as to have a solid concentration of 20 mass%, thereby preparing a resin particle dispersion X-1. The property values are shown in Table 4.

Production Examples X2 to X7 and X9 (production of resin particle dispersions X-2 to X-7 and X-9)

Resin particle dispersions X-2 to X-7 and X-9 were produced in the same manner as in Production Example X1 except that the resins were changed as shown in Table 4. The property values are shown in Table 4.

Production Example X8 (production of resin particle dispersion X-8)

200 g of the resin A-1 and 200 g of methyl ethyl ketone were put into a 3-L reactor equipped with a stirrer, a reflux condenser, a dropping funnel, a thermometer, and a nitrogen inlet tube, and dissolved at 73°C over 2 hours. An aqueous solution of 5 mass% sodium hydroxide was added to the resultant solution so that the degree of neutralization could be 60 mol% relative to the acid value of the resin A-1, and stirred for 30 minutes.

Next, while the mixture was kept at 73°C, 700 g of deionized water was added over 50 minutes with stirring at 200 r/min for phase inversion emulsification. While the resultant solution was kept at 73°C, methyl ethyl ketone was evaporated under reduced pressure to give a dispersion. Subsequently, with stirring, the dispersion was cooled to 30°C, and then deionized water was added so as to have a solid concentration of 20 mass%, thereby preparing a resin particle dispersion X-8. The property values are shown in Table 4.

Table 4

| Production Example | Production Example X1 | Production Example X2 | Production Example X3 | Production Example X4 | Production Example X5 | Production Example X6 | Production Example X7 | Production Example X8 | Production Example X9 |
|---|---|---|---|---|---|---|---|---|---|
| Resin particle dispersion | X-1 | X-2 | X-3 | X-4 | X-5 | X-6 | X-7 | X-8 | X-9 |
| Resin A *1 | A-1(80) | A-1(80) | A-1(80) | A-2(80) | A-1(80) | A-3(80) | A'-1(80) | A-1(100) | A'-2(80) |
| Resin C *1 | C-1(20) | C-2(20) | C-3(20) | C-2(20) | C-4(20) | C-2(20) | C-2(20) | - | C-2(20) |
| Volume median particle diameter $D_{50}$ (mm) | 0.22 | 0.21 | 0.23 | 0.23 | 0.24 | 0.22 | 0.23 | 0.21 | 0.23 |
| CV value (%) | 33 | 32 | 34 | 33 | 34 | 35 | 35 | 30 | 34 |

*1 The parenthesized numerical value denotes a charged amount (part by mass).

Production Example Y1 (production of resin particle dispersion Y-1)

200 g of the resin B-1 and 200 g of mwthyl ethyl ketone were put into a 3-L reactor equipped with a stirrer, a reflux condenser, a dropping funnel, a thermometer, and a nitrogen inlet tube, and dissolved at 73°C over 2 hours. An aqueous solution of 5 mass% sodium hydroxide was added to the resultant solution so that the degree of neutralization could be 60 mol% relative to the acid value of the resin B-1, and stirred for 30 minutes.

Next, while the mixture was kept at 73°C, 700 g of deionized water was added over 50 minutes with stirring at 200 r/min for phase inversion emulsification. While the resultant solution was kept at 73°C, methyl ethyl ketone was evaporated under reduced pressure to give a dispersion. Subsequently, with stirring, the dispersion was cooled to 30°C, and then deionized water was added so as to have a solid concentration of 20 mass%, thereby preparing a resin particle dispersion Y-1. The property values are shown in Table 5.

Production Example Y2 (production of resin particle dispersion Y-2)

A resin particle dispersion Y-2 was produced in the same manner as in Production Example Y1 except that the resin was changed as shown in Table 5. The property values are shown in Table 5.

Table 5

| Production Example | Production Example Y1 | Production Example Y2 |
|---|---|---|
| Resin particle dispersion | Y-1 | Y-2 |
| Resin B*1 | B-1(100) | A-4 (100) |
| Volume median particle diameter $D_{50}$ (mm) | 0.09 | 0.10 |
| CV value (%) | 28 | 30 |
| *1 The parenthesized numerical value means a charged amount (part by mass). | | |

[Production of composite resin (D)]

Production Example D1 (production of resin D-1)

The inside of a 10-L four-neck flask equipped with a nitrogen inlet tube, a dewatering tube, a stirrer, and a thermocouple was purged with nitrogen, and 4,313 g of propylene oxide (2.2) adduct of bisphenol A, 818 g of terephthalic acid, 30 g of tin(II) di(2-ethylhexanoate), and 3.0 g of gallic acid were put thereinto, a reaction system was heated to 235°C with stirring in a nitrogen atmosphere, and then kept at 235°C for 5 hours, and the pressure inside the flask was lowered, and then kept at 8 kPa for 1 hour. Subsequently, the reaction system was restored to an atmospheric pressure, and then cooled to 160°C. While the reaction system was kept at 160°C, a mixture of 2,756 g of styrene, 689 g of stearyl methacrylate, 142 g of acrylic acid, and 413 g of dibutyl peroxide was dropwise added to the reaction system over 1 hour. After that, the reaction system was kept at 160°C for 30 minutes, and then heated to 200°C, and the pressure inside the flask was further lowered, and kept at 8 kPa for 1 hour. Subsequently, the reaction system was restored to an atmospheric pressure, and cooled to 190°C, 727 g of succinic acid was added, and the mixture was heated to 210°C at a rate of 10°C/h, and was subjected to a reaction at 4 kPa to a desired softening point to give a resin D-1. The property values are shown in Table 6.

Table 6

| Production Example | | | Production Example D1 | |
|---|---|---|---|---|
| Resin | | | D-1 | |
| Raw material monomer for polyester resin segment | | | Charged amount (g) | Part by mole *2 |
| | Alcohol component | BPA-PO *1 | 4313 | 100 |
| | Carboxylic acid component | Terephthalic acid | 818 | 40 |
| | | Succinic acid | 727 | 50 |
| Bireactive monomer | Acrylic acid | | 142 | 16 |

(continued)

| Production Example | | Production Example D1 | |
|---|---|---|---|
| Resin | | D-1 | |
| Raw material monomer for addition polymer resin segment | | Charged amount (g) | mass% *3 |
| | Styrene | 2756 | 80 |
| | Stearyl methacrylate | 689 | 20 |
| Esterification catalyst | Tin(II) di(2-ethylhexanoate) (g) | 30 | |
| Esterification promoter | Gallic acid (g) | 3.0 | |
| Radical polymerization initiator | Dibutyl peroxide (g) | 413 | |
| Polyester resin segment amount (mass%) | | 60 | |
| Addition polymer resin segment amount (mass%) | | 40 | |
| Properties | Softening point (°C) | 91 | |
| | Glass transition temperature (°C) | 42 | |
| | Crystallinity index | 1.8 | |
| | Acid value (mgKOH/g) | 24 | |
| *1: BPA-PO means a propylene oxide (2.2) adduct of bisphenol A.<br>*2: This means part by mole of each monomer constituting the raw material monomer and the bireactive monomer based on 100 parts by mole of the alcohol component of the raw material monomer for polyester resin segment.<br>*3: This means the content (mass%) of each monomer constituting the raw material monomer in the total amount of addition polymer resin segment. | | | |

Production Example S1 (production of resin particle dispersion S-1)

200 g of the resin D-1 and 200 g of methyl ethyl ketone were put into a 3-L reactor equipped with a stirrer, a reflux condenser, a dropping funnel, a thermometer, and a nitrogen inlet tube, and dissolved at 73°C over 2 hours. An aqueous solution of 5 mass% sodium hydroxide was added to the resultant solution so that the degree of neutralization could be 60 mol% relative to the acid value of the resin D-1, and stirred for 30 minutes.

Next, while the mixture was kept at 73°C, 700 g of deionized water was added over 50 minutes with stirring at 280 r/min for phase inversion emulsification. While the resultant solution was kept at 73°C, methyl ethyl ketone was evaporated under reduced pressure to give an aqueous dispersion. Subsequently, with stirring at 280 r/min, the aqueous dispersion was cooled to 30°C, and deionized water was added to have a solid concentration of 20 mass%, thereby preparing a resin particle dispersion S-1. The property values are shown in Table 7.

Table 7

| Production Example | Production Example S1 |
|---|---|
| Resin particle dispersion | S-1 |
| Resin D*1 | D-1 (100) |
| Volume median particle diameter $D_{50}$ (μm) | 0.90 |
| CV value (%) | 23 |
| *1 The parenthesized numerical value means a charged amount (part by mass). | |

[Production of releasing agent particle dispersion]

Production Example W1 (production of releasing agent particle dispersion W-1)

120 g of deionized water, 86 g of the resin particle dispersion S-1, and 40 g of paraffin wax "HNP-9" (from NIPPON SEIRO CO., LTD., melting point: 75°C) were added to a 1-L beaker, melted while kept at a temperature of 90

to 95°C, and then stirred to give a molten mixture.

While the resultant molten mixture was kept at a temperature of 90 to 95°C, the molten mixture was dispersed for 20 minutes using an ultrasonic homogenizer "US-600T" (by NIHONSEIKI KAISHA LTD.), and then cooled to room temperature (20°C). To the resultant dispersion, deionized water was added to adjust the solid concentration to 20 mass%, thereby preparing a releasing agent particle dispersion W-1. The property values of the releasing agent particles in the releasing agent particle dispersion W-1 are shown in Table 8.

Production Example W2 (production of releasing agent particle dispersion W-2)

A releasing agent particle dispersion W-2 was produced in the same manner as in Production Example W1 except that the kind of the releasing agent was changed to Fischer-Tropsch wax "FNP-0090" (from NIPPON SEIRO CO., LTD., melting point 90°C) shown in Table 8. The property values of the releasing agent particles in the releasing agent particle dispersion W-2 are shown in Table 8.

Table 8

| Production Example | | Production Example W1 | Production Example W2 |
|---|---|---|---|
| Releasing agent particle dispersion | | W-1 | W-2 |
| Releasing agent * 1 | Paraffin waxHNP-9 *2 | 40 | - |
| | Fischer-Tropsch waxFNP-0090 *3 | - | 40 |
| Resin particle dispersion *1 | S-1 (solid content: 20 mass%) | 86 | 86 |
| Volume median particle diameter $D_{50}$ (μm) | | 0.28 | 0.24 |
| CV value (%) | | 20 | 20 |

*1: The numerical values of the releasing agents and the resin particle dispersions mean a blending amount (g).
*2: Paraffin wax HNP-9, melting point: 75°C, from NIPPON SEIRO CO., LTD.
*3: Fischer-Tropsch waxFNP-0090, melting point: 90°C, from NIPPON SEIRO CO., LTD.

[Production of addition polymer (E)]

Production Example E1 (synthesis of addition polymer E-1)

Raw material monomers as in Table 9 showing the kind and the amount thereof were mixed to prepare a monomer mixture in a monomer total amount of 100 g.

The inside of a four-neck flask equipped with a nitrogen inlet tube, a dropping funnel, a stirrer, and a thermocouple was purged with nitrogen, and 18 g of methyl ethyl ketone, 0.03 g of 2-mercaptoethanol, and 10 mass% of the monomer mixture were put thereinto and heated to 75°C with stirring. While a reaction system was kept at 75°C, a mixture of 90 mass% of the remaining monomer mixture, 0.27 g of 2-mercaptoethanol, 42 g of methyl ethyl ketone, and 3 g of 2,2'-azobis(2,4-dimethylvaleronitrile) "V-65" (from FUJIFILM Wako Pure Chemical Corporation) was dropwise added to the reaction system via the dropping funnel over 3 hours. After the dropwise addition, the reaction system was kept at 75°C for 2 hours, a solution prepared by dissolving 3 g of V-65 in 5 g of methyl ethyl ketone was added, and the reaction system was further kept at 75°C for 2 hours and then at 80°C for 2 hours. Subsequently, methyl ethyl ketone was evaporated under reduced pressure to give an addition polymer E-1. The weight-average molecular weight of the resultant addition polymer is shown in Table 9.

Table 9

| Production Example | | Production Example E1 |
|---|---|---|
| Addition polymer | | E-1 |
| Raw material monomer (part by mass) | Methacrylic acid | 16 |
| | Styrene | 44 |
| | Styrene macromonomer *1 | 15 |
| | Methoxypolyethylene glycol methacrylate *2 | 25 |

(continued)

| Production Example | | Production Example E1 |
|---|---|---|
| Properties | Weight average molecular weight | 50,000 |
| *1: "AS-6S" (from TOAGOSEI CO., LTD., number-average molecular weight: 6,000, solid concentration: 50 mass%) Provided that the blending amount in Table is the blending amount based on a solid content.<br>*2: "Blemmer PME-200" (from NOF CORPORATION) | | |

[Production of colorant particle dispersion]

Production Example Z1 (production of colorant particle dispersion Z-1)

75 g of the addition polymer E-1 and 630 g of methyl ethyl ketone were put into a 5-L reactor equipped with a stirrer with a disper blade, a reflux condenser, a dropping funnel, a thermometer, and a nitrogen inlet tube, and the resin was dissolved at 20°C. 101 g of an aqueous solution of 5 mass% sodium hydroxide (to make the addition polymer E-1 have a degree of neutralization of 91 mol%) was added to the resultant solution, 955 g of deionized water was further added, and stirred with the disper blade at 2,000 r/min at 20°C for 10 minutes.

Next, 300 g of pigment yellow 155 (from Clariant K.K., "Toner Yellow 3GP-CT", molecular weight: 717) was added, and stirred with the disper blade at 6,400 r/min at 20°C for 2 hours. Subsequently, the mixture was filtered through a 200-mesh filter, and processed for 15 passes under a pressure of 150 MPa using a homogenizer "Microfluidizer M-110EH" (from Micro fluidics Corporation). While the resultant dispersion was stirred, methyl ethyl ketone and a part of water were evaporated at 70°C under reduced pressure. After cooling, this was filtered through a 200-mesh filter, and deionized water was added so as to have a solid concentration of 20 mass%, thereby giving a colorant particle dispersion Z-1. The volume median particle diameter $D_{50}$ of the colorant particles in the resultant aqueous dispersion 2-1 was 0.10 μm, and the CV value was 28%.

[Production of toner]

Example 1 (production of toner 1)

Into a 3-L four-necked flask equipped with a dewatering conduit, a stirrer, and a thermocouple, 500 g of the resin particle dispersion X-1, 49 g of the releasing agent particle dispersion W-1, 49 g of the releasing agent particle dispersion W-2, 63 g of the colorant particle dispersion Z-1, and 3.3 g of an aqueous solution of 15 mass% sodium dodecylbenzenesulfonate "NEOPELEX G-15" (from Kao Corporation, anionic surfactant) were put, and then mixed at a temperature of 25°C. Next, while the mixture was stirred, a solution prepared by adding an aqueous solution of 4.8 mass% potassium hydroxide to an aqueous solution prepared by dissolving 43 g of ammonium sulfate in 980 g of deionized water to adjust the pH to 8.2 was dropwise added to the mixture at 25°C over 10 minutes, the mixture was then heated to 58°C over 2 hours, and kept at 58°C until the volume median particle diameter $D_{50}$ of the aggregated particles could reach 6.2 μm to give a dispersion of aggregated particles 1. The obtained dispersion of the aggregated particles was cooled to 53°C. While the dispersion was kept at 53°C, 75 g of the resin particle dispersion Y-1 was added to the dispersion of the aggregated particles 1 over 90 minutes to give a dispersion of aggregated particles 2 in which the resin particles are aggregated in the aggregated particles 1.

To the resultant dispersion of the aggregated particles 2, 25 g of polyoxyethylene lauryl ether sodium sulfate "Emal E-27C" (from Kao Corporation, anionic surfactant, effective concentration: 27 mass%) and 1,200 g of deionized water were added. Subsequently, the mixture was heated to 75°C over 1 hour, and kept at 75°C until the degree of circularity could reach 0.970, thereby giving a dispersion of coalesced particles formed through coalescing of the aggregated particles.

The resultant dispersion of the coalesced particle was cooled to 30°C, and the solid fraction was separated through suction filtration of the dispersion, washed with deionized water at 25°C, and filtered through suction filtration at 25°C for 2 hours. Subsequently, using a vacuum constant-temperature drier "DRV622DA" (from ADVANTEC), this residue was dried in vacuum at 33°C for 24 hours to give toner particles having a core-shell structure. 100 parts by mass of the toner particles, 2.5 parts by mass of hydrophobic silica "RY50" (from NIPPON AEROSIL CO., LTD., number-average particle diameter: 0.04 μm), and 1.0 part by mass of hydrophobic silica "Cabosil (trademark) TS720" (from Cabot Corporation, number-average particle diameter: 0.012 μm) were put into a Henschel mixer, stirred, and then filtered through a 150-mesh sieve to give a toner 1. The property values of the toner particles are shown in Table 10.

[Evaluation of toner]

The low-temperature fusing property, charge property, and durability of the resultant toner 1 were evaluated as follows.

[Low-temperature fusing property]

Using a commercially-available printer "Microline (trademark) 5400" (from Oki Electric Industry Co., Ltd.), a solid image was outputted but not fused on high-quality paper "J Paper A4 Size" (from FUJIFILM Business Innovation Corp.) in such a manner that the toner deposition amount on the paper could be $0.60 \pm 0.01$ mg/cm$^2$ in a length of 50 mm with a blank space of 5 mm from the top of the A4 paper left to remain as such.
Next, the same printer in which the fusing device had been modified to be applicable to a varying temperature was prepared, the temperature of the fusing device was set at 100°C, and the toner was fused at a speed of 0.9 seconds/paper in the lengthwise direction of the A4 paper to give prints.
In the same manner but the temperature of the fusing device was elevated at intervals of 5°C, the toner was fused also to give prints.
From the blank space at the top of the image to the solid image on the print, a mending tape "Scotch (trademark) Mending Tape 810" (from 3M Japan Limited, width: 18 mm) cut in a size of 50 mm was lightly adhered to the print, then a weight of 500 g (contact area: 1,963 mm$^2$) was put on it, and pressed for one back-and-forth movement at a speed of 10 mm/s. Subsequently, the adhered tape was peeled from the bottom side at a peeling angle of 180° and at a speed of 10 mm/s to give a tape-peeled print. 30 sheets of high-quality paper "Excellent White Paper A4 Size" (from Oki Electric Industry Co., Ltd.) were laid below the print before tape adhesion and after tape peeling, and the reflection image density of the fused image part of each print before tape adhesion and after tape peeling was measured using a colorimeter "Spectro Eye" (from X-Rite, light incidence condition: standard light source $D_{50}$, observation viewing field 2°, density standard DINNB, absolute white standard). From the reflection image density, the fusing ratio was calculated according to the following expression.

Fusing Ratio (%) = (reflection image density after tape peeling/reflection image density before tape adhesion) $\times$ 100

The lowest temperature at which the fusing ratio is 90% or more is referred to as a lowest fusing temperature T1. As the lowest fusing temperature is lower, the toner is more excellent in low-temperature fusing property.

[Charge property]

2.1 g of the toner 1 and 27.9 g of silicone ferrite carrier (from KANTO DENKA KOGYO CO., LTD., average particle diameter: 40 μm) were put into a 50-mL cylindrical polypropylene bottle (from NIKKO HANSEN & CO., LTD.) at a temperature of 32°C and a relative humidity of 85%, and mixed at 250 r/min using a ball mill. Subsequently, the charge amount was measured using "q/m-meter" (from EPPING GmbH) under the following conditions. The evaluation results are shown in Table 10.

Mesh size: 635-mesh (mesh opening: 24 μm, made of stainless steel)
Soft blow: blow pressure (1,000 V)
Suction time: 90 seconds

The charge amount was determined according to the following expression. As the absolute value of the numerical value is larger, the toner is more excellent in charge property.

Charge amount (μC/g) = total quantity of electricity after 90 seconds (μC)/amount of sucked toner (g)

[Durability of toner]

The toner was loaded into an ID cartridge "imaging dram for ML-5400" manufactured by Oki Electric Industry Co., Ltd., that had been modified so that a development roller could be visually observed, the printer was operated in an idling mode at 70 r/min (corresponding to 36 ppm) under conditions including a temperature of 25°C and a humidity of 50%, and filming on the development roller was visually observed every hour. The time until the occurrence of filming

is an indicator of durability. As the time until the occurrence of filming on the development roller is longer, the toner is more excellent in durability. The evaluation results are shown in Table 10.

Examples 2 to 5, 7 to 8, and Comparative Examples 1 to 3 (production of toners 2 to 5 and 7 to 11)

Toners were produced in the same manner as in Example 1 except that the resin particle dispersion was changed to dispersions shown in Table 10. The low-temperature fusing property, the charge property, and the durability of the toners 2 to 5 and 7 to 11 were measured in the same manner as in Example 1. The properties and the evaluation results of the toners 2 to 5 and 7 to 11 are shown in Table 10.

Example 6 (production of toner 6)

Into a 3-L four-necked flask equipped with a dewatering conduit, a stirrer, and a thermocouple, 500 g of the resin particle dispersion X-2, 49 g of the releasing agent particle dispersion W-1. 49 g of the releasing agent particle dispersion W-2, 63 g of the colorant particle dispersion Z-1, and 3.3 g of an aqueous solution of 15 mass% sodium dodecylbenzenesulfonate "NEOPELEX G-15" (from Kao Corporation, anionic surfactant) were put, and then mixed at a temperature of 25°C. Next, while the mixture was stirred, a solution prepared by adding an aqueous solution of 4.8 mass% potassium hydroxide to an aqueous solution prepared by dissolving 40 g of ammonium sulfate in 570 g of deionized water to adjust the pH to 8.2 was dropwise added to the mixture at 25°C over 10 minutes, the mixture was then heated to 58°C over 2 hours, and kept at 58°C until the volume median particle diameter $D_{50}$ of the aggregated particles could reach 6.2 μm to give a dispersion of aggregated particles 1.

To the resultant dispersion of the aggregated particles 1, 226 g of polyoxyethylene lauryl ether sodium sulfate "Emal E-27C" (from Kao Corporation, anionic surfactant, effective concentration: 27 mass%) and 1,358 g of deionized water were added. Subsequently, the mixture was heated to 75°C over 1 hour, and kept at 75°C until the degree of circularity could reach 0.970, thereby giving a dispersion of coalesced particles formed through coalescing of the aggregated particles. A toner 6 was obtained by the following operation that was the same manner as in Example 1. The low-temperature fusing property, charge property, and durability of the toner 6 were measured in the same manner as in Example 1. The properties and evaluation results of the toner 6 are shown in Table 10.

Table 10

| Example | | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|
| Toner | | 1 | 2 | 3 | 4 | 5 | 6 | 7 | 8 | 9 | 10 | 11 |
| Core | Resin particle dispersion | X-1 | X-2 | X-3 | X-4 | X-2 | X-2 | X-5 | X-6 | X-7 | X-8 | X-9 |
| Shell | Resin particle dispersion | Y-1 | Y-1 | Y-1 | Y-1 | Y-2 | - | Y-1 | Y-1 | Y-1 | Y-1 | Y-1 |
| Properties of toner particles | Volume median particle diameter $D_{50}$ (μm) | 6.0 | 6.0 | 6.0 | 6.0 | 6.0 | 6.0 | 6.0 | 6.0 | 6.0 | 6.0 | 6.0 |
| | CV value (%) | 27 | 26 | 27 | 28 | 27 | 27 | 26 | 26 | 27 | 27 | 26 |
| Evaluation | Low-temperature fusing property (°C) | 110 | 110 | 105 | 115 | 110 | 100 | 105 | 120 | 120 | 135 | 115 |
| | Charge property (-μC/g) | -24 | -27 | -22 | -20 | -18 | -16 | -25 | -20 | -13 | -31 | -17 |
| | Durability (filming occurrence time) (h) | 7 | 7 | 8 | 5 | 6 | 5 | 8 | 6 | 2 | 8 | 3 |

As shown in Table 10, the toner 1 to 8 of the present invention were a toner having excellent low-temperature fusing property, charge property, and durability.

On the other hand, the toner 9 contains the alcohol component (a) in which the content of the aliphatic diol (a2) is 40 mol%, and it is believed that the hydrophobic interaction between the amorphous resin and the crystalline resin is low, and the toner 9 has deteriorated charge property and durability. The toner particles of the toner 10 do not contain the crystalline polyester resin (C), and therefore it is believed that the thermal responsiveness in fusing process is deteriorated, and the fusing temperature is high. Furthermore, the toner 11 contains the alcohol component (a) in which the content of the aliphatic diol (a1) is 70 mol%, and it is believed that the hydrophobic interaction between the amorphous resin and the crystalline resin is low, and the toner 11 has deteriorated durability.

Industrial Applicability

The present invention can provide an electrostatic image development toner that is excellent in low-temperature fusing property, charge property, and durability. The electrostatic image development toner of the present invention is excellent in low-temperature fusing property, charge property, and durability, and therefore the electrostatic image development toner is adaptable for an increase in the speed of printing and high image quality of prints, and is especially useful for development of latent images formed in an electrophotographic method, an electrostatic recording method, an electrostatic printing method, and the like.

## Claims

**1.** An electrostatic image development toner comprising an amorphous resin and a crystalline resin as binder resins,

wherein the amorphous resin contains an amorphous polyester resin (A) that is a polycondensate of an alcohol component (a) containing 80 mol% or more of an aliphatic diol (a1) and a carboxylic acid component (b),
the alcohol component (a) contains 60 mol% or more of an aliphatic diol (a2) having 5 or 6 carbon atoms and having an alkyl group on a side chain, and
the crystalline resin contains a crystalline polyester resin (C) that is a polycondensate of an aliphatic alcohol (c) and a carboxylic acid component (d).

**2.** The electrostatic image development toner according to claim 1, wherein the aliphatic diol (a1) is an aliphatic diol having 2 or more and 16 or less carbon atoms.

**3.** The electrostatic image development toner according to claim 1 or 2, wherein the aliphatic diol (a2) contains at least one selected from neopentyl glycol and 3-methyl-1,5-pentanediol.

**4.** The electrostatic image development toner according to any one of claims 1 to 3, wherein the carboxylic acid component (b) contains at least one selected from terephthalic acid and isophthalic acid.

**5.** The electrostatic image development toner according to any one of claims 1 to 4, wherein the aliphatic alcohol (c) contains a linear aliphatic diol.

**6.** The electrostatic image development toner according to claim 5, wherein the linear aliphatic diol contains a linear aliphatic diol having 2 or more and 12 or less carbon atoms.

**7.** The electrostatic image development toner according to any one of claims 1 to 6, wherein the carboxylic acid component (d) contains an aliphatic dicarboxylic acid.

**8.** The electrostatic image development toner according to claim 7, wherein the aliphatic dicarboxylic acid contains at least one selected from sebacic acid, dodecanedioic acid, and fumaric acid.

**9.** The electrostatic image development toner according to any one of claims 1 to 8, wherein a ratio by mass of the crystalline polyester resin (C) to the amorphous polyester resin (A) [crystalline polyester resin (C)/amorphous polyester resin (A)] is 5/95 or more and 40/60 or less.

**10.** The electrostatic image development toner according to any one of claims 1 to 9, further comprising at least one of a colorant or a releasing agent.

**11.** The electrostatic image development toner according to any one of claims 1 to 10, wherein the electrostatic image development toner has a core-shell structure.

**12.** A method for producing an electrostatic image development toner comprising:

a step of aggregating in an aqueous medium resin particles into which an amorphous resin and a crystalline resin are incorporated together or separately; and
a coalescing step,
wherein the amorphous resin contains an amorphous polyester resin (A) that is a polycondensate of an alcohol component (a) containing 80 mol% or more of an aliphatic diol (a1) and a carboxylic acid component (b),
the alcohol component (a) contains 60 mol% or more of an aliphatic diol (a2) having 5 or 6 carbon atoms and having an alkyl group on a side chain, and
the crystalline resin contains a crystalline polyester resin (C) that is a polycondensate of an aliphatic alcohol (c) and a carboxylic acid component (d).

**13.** The method for producing an electrostatic image development toner according to claim 12, further comprising:

after the step of aggregating the resin particles and before the coalescing step, a step of attaching shell resin particles containing an amorphous resin to the resultant aggregated particles 1 to obtain aggregated particles 2; and
a step of aggregating the shell resin particles.

**14.** The method for producing an electrostatic image development toner according to claim 13, wherein a ratio of a mass of the shell resin particles to a mass of the aggregated particles 1 (shell resin particles/aggregated particles 1) is 1/99 or more and 25/75 or less.

**INTERNATIONAL SEARCH REPORT**

International application No. **PCT/JP2022/048560**

**A. CLASSIFICATION OF SUBJECT MATTER**

***G03G 9/087***(2006.01)i; ***G03G 9/093***(2006.01)i; ***G03G 9/097***(2006.01)i
FI: G03G9/087 331; G03G9/097 365; G03G9/093

According to International Patent Classification (IPC) or to both national classification and IPC

**B. FIELDS SEARCHED**

Minimum documentation searched (classification system followed by classification symbols)

G03G9/087; G03G9/093; G03G9/097

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-60745 A (CANON KABUSHIKI KAISHA) 16 April 2020 (2020-04-16) paragraphs [0027]-[0073], [0157]-[0179] | 1-14 |
| A | JP 2018-173579 A (KAO CORP.) 08 November 2018 (2018-11-08) paragraphs [0013]-[0042], [0059]-[0078] | 1-14 |
| A | JP 2018-151546 A (RICOH CO., LTD.) 27 September 2018 (2018-09-27) paragraphs [0034]-[0093], [0205]-[0240] | 1-14 |
| A | JP 2014-85587 A (KAO CORP.) 12 May 2014 (2014-05-12) paragraphs [0015]-[0075], [0203]-[0231] | 1-14 |
| A | JP 2012-8529 A (KAO CORP.) 12 January 2012 (2012-01-12) paragraphs [0125]-[0173] | 1-14 |
| A | JP 2011-186456 A (XEROX CORP.) 22 September 2011 (2011-09-22) claims | 1-14 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 February 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/048560**

| Patent document cited in search report | Publication date (day/month/year) | Patent family member(s) | Publication date (day/month/year) |
|---|---|---|---|
| JP 2020-60745 A | 16 April 2020 | (Family: none) | |
| JP 2018-173579 A | 08 November 2018 | (Family: none) | |
| JP 2018-151546 A | 27 September 2018 | (Family: none) | |
| JP 2014-85587 A | 12 May 2014 | US 2014/0120465 A1<br>paragraphs [0024]-[0128], [0249]-[0305]<br>EP 2725424 A1<br>CN 103777483 A | |
| JP 2012-8529 A | 12 January 2012 | US 2011/0294062 A1<br>paragraphs [0138]-[0185]<br>CN 102262367 A | |
| JP 2011-186456 A | 22 September 2011 | US 2011/0223525 A1<br>claims<br>GB 2479231 A<br>DE 102011004720 A1<br>CA 2733137 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021135471 A
- JP 2021026129 A